# FASCICULE DE BREVET EUROPEEN

(11) **EP 1 833 876 B1**
(45) Date de publication et mention de la délivrance du brevet: **07.10.2009**
(21) Numéro de dépôt: 05850585.0
(22) Date de dépôt: 22.12.2005
(51) Int. Cl.: C08G 64/02

(54) **POLYESTERS DE POLYCARBONATE DE GLYCEROL ET D'AUTRES POLYMERES ET COPOLYMERES POLYHYDROXYLES, PROCEDE D'ACYLATION ET APPLICATIONS**
GLYCERINPOLYCARBONATPOLYESTER UND ANDERE HYDROXYLIERTE POLYMERE UND COPOLYMERE, ACYLIERUNGSVERFAHREN UND VERWENDUNGEN
GLYCEROL POLYCARBONATE POLYESTERS AND OTHER HYDROXYLATED POLYMERS AND COPOLYMERS, ACYLATION METHOD AND USES

(30) Priorité: 23.12.2004 FR 0413826
(43) Date de publication de la demande: 19.09.2007
(73) Titulaire: Condat, 38670 Chasse sur Rhône (FR); INRA, 75007 Paris (FR)
(72) Inventeur: MOULOUNGUI, Zéphirin, F-31500 Toulouse (FR); TRUONG DINH, Nguyen, F-69440 St Laurent d'Agny (FR); MARECHAL, Philippe, F-31400 Toulouse (FR)
(74) Mandataire: Gaucherand, Michel
(86) Numéro de dépôt international: PCT/FR2005/003244
(87) Numéro de publication internationale: WO 2006/090022

(56) Documents cités:
- US-A- 3 637 774
- US-A- 5 721 305
- RAY C.R.III, GRINSTAFF M.W.: "Polycarbonate and Poly(carbonate-ester)s synthesized from biocompatible building blocks of glycerol and lactic acid" MACROMOLECULES, vol. 36, 2003, pages 3557-3562, XP002340308

## Description

### DOMAINE DE L'INVENTION

L'invention concerne une composition de polyesters au moins partiellement acylés de composés polyhydroxylés en mélange constitué des polycarbonates de glycérol, des polyglycérols spécifiques et des copolymères [(α-hydroxyméthyl) oxyéthylène/(α-hydroxyméthyl) éthylène carbonate], des copolymères [(α-hydroxyalkyl) oxyéthylène/ (α-hydroxyalkyl) éthylène carbonate], des copolymères [(α-alkyl) oxyéthylène/(α-hydroxyalkyl) oxyéthylène], éventuellement en présence de carbonate de glycérol et/ou d'autres carbonates organiques et de glycérol.

L'invention concerne aussi un procédé catalytique ou non d'acylation au moins partielle de compositions comprenant en mélange l'un au moins des composés polyhydroxylés qui sont des appartenant au groupe constitué par les polycarbonates de glycérol, des polyglycérols spécifiques, des copolymères [(α-hydroxyméthyl) oxyéthylène/(α-hydroxyméthyl) éthylène carbonate], des copolymères [(α-hydroxyalkyl) oxyéthylène/(α-alkyl) éthylène carbonate], des copolymères [(α-alkyl) oxyéthylène/(α-hydroxyalkyl) oxyéthylène].
i) après leur séparation sélective quand ils sont initialement en mélange ou
ii) en mélange, éventuellement avec du carbonate de glycérol et/ou d'autres carbonates organiques, du glycérol et/ou d'autres composés coproduits et/ou résiduels avant l'acylation, ladite acylation au moins partielle étant suivie d'une extraction séparative de chacun des composés au moins partiellement acylés.

L'invention concerne aussi un procédé d'extraction de chaque constituant de la composition organique,
i) avant l'acylation, suivie de l'acylation au moins partielle du constituant extrait de la composition organique,
ii) après acylation collective au moins partielle de l'un au moins des constituants du mélange.

L'invention concerne enfin l'utilisation et l'application à de nombreux domaines de la composition organique au moins partiellement acylée, ou de chacun de ses constituants au moins partiellement acylés, en raison des nombreuses caractéristiques spécifiques mais surtout en particulier leur caractère lipophile ou liposoluble.

### ETAT DE LA TECHNIQUE

Depuis longtemps, avec plus ou moins de réussites, les industriels ont essayé de remplacer les matières premières issues de l'industrie pétrolière ou de l'industrie chimique par leurs transformations en produits finis, soit en de nouvelles molécules, soit en de nouvelles formulations d'usage pour des raisons multiples, techniques ou économiques. Récemment, le renforcement des contraintes environnementales en Europe, notamment dans la protection du milieu aqueux (Ecolabel, Blue Angel,classement Wasser Gefahrdung Klasse...)et de l'air (Protocole de Kyoto..) et toxicologiques (directives Biocides, projet européen REACH...) ont fait plus qu'orienter la recherche vers une nouvelle voie, celle des produits végétaux provenant de l'exploitation des forêts et surtout de l'agriculture, encore appelés « agro-molécules ». Ces dernières se révèlent particulièrement intéressantes car complètement naturelles, non toxiques, biodégradables, avec un bilan CO₂ équilibré et surtout renouvelables . Cette voie est également très encouragée en particulier dans les pays développés du fait qu'elle donne un débouché industriel pour la première fois intéressant et concret à la filière agricole avec potentiellement une alternative aux ressources fossiles.

Parmi ces « agro-molécules » disponibles, se trouvent en première place « les huiles végétales » ou animales, c'est-à-dire des matières grasses et ceci depuis l'antiquité. Ces matières grasses sont des esters d'acides gras et de glycérol ou triacylglycérols, c'est-à-dire présentant des acides gras à longue chaîne carbonée, saturée ou non, avec une ou plusieurs insaturations et autres fonctions hydroxyle, époxyde ou autres. Antérieurement, on les utilisait telles quelles ou comme « support » ou additifs dans des formulations d'usage complexes. Mais grâce à l'évolution des technologies on peut, d'aujourd'hui, les transformer en bio-carburants , bio-solvants, bio-détergents, bio-lubrifiants, bio-plastiques, bio-matériaux, dans des domaines d'applications très diverses.

parmi les voies de transformations les plus « riches » et les plus utilisées, l'estérification occupe une place privilégiée car l'estérification est régiosélective et touche essentiellement les centres carboxyliques des acides gras ou les centres carboxyesters des esters gras, des triglycérides et les centres hydroxyles des monoalcools ou des polyols. Il en résulte des modifications chimiques structurales et fonctionnelles de la molécule organique des esters gras engendrés. Dès lors, par cette technique d'estérification et à partir de ces huiles végétales, il est possible de remédier à certains défauts intrinsèques ou à apporter de nouvelles propriétés d'usage.

De tels esters ont été décrits dans de nombreux articles et travaux, mais ne sont retenues parmi eux à titre illustratif, que quelques applications significatives, en tant que bio-lubrifiants.
- Les esters résultant de l'estérification de monoacides gras par les néopentyl polyols pour produire des esters de néopentyl polyols constituent des bases lubrifiantes, en particulier pour les turboréacteurs d'aviation (Les lubrifiants à base d'esters de néopentyl polyols. OCL -VOL. 3 N°1 janvier/février 1996 - p 57 à 63 et Total or partial Erucate of Pentaerythritol JAOCS Vol. 75 N° 2 1998 p 293 à 299).

Par la suite, les conditions de l'estérification des acides gras ont également fait l'objet de publications, en particulier des acides dicarboxyliques en C₈ à C₂₀, dont les esters sont destinés à des bases lubrifiantes (Fatty Acids in Industry edited by Robert W. Johnson Earl Fritz pages 327 à 349). Cette estérification s'effectue en présence de catalyseurs appropriés, de tels catalyseurs pouvant être des acides (H₃PO₄, H₂SO₄, R-SO₃H), des superacides (HClO₄, ClSO₃H, HSO₃F, CF₃SO₃H et autres) (Erdöl und Kohle -Erdgas Pétrochimie Vereinigt mit Brennstoff - Chemie : part I pages 244 à 248).
Enfin l'estérification catalytique en présence de catalyseurs acides (acide paratoluène sulfonique, acide sulfurique ou autres), de catalyseurs alcalins (acétate métallique, oxyde métallique et autres) est également évoquée dans l'état de la technique (Transestérification of Junzo OTERA - American Chemical Society - Chemical reviews 1993 -vol 93 n° 4, p 1449 à 1470).

Outre la bio-dégradation et la non-toxicité qui leur sont inhérentes (oleochemical esters - environmentally compatible raw materials for oils and lubricants from renewable resources. Fett/Lipid, vol 101 Nr 6,S. 1999 p 192 à 198), ces esters modifiés sont particulièrement performants en lubrification (modificateur de friction, anti-usure), en rhéologie à basse température (point de congélation à température négative) et à haute température (peu de variation entre haute et moyenne température, se traduisant par un indice de viscosité élevé), stable à l'oxydation et à la température, stable thermiquement, résistance au feu comparativement aux « homologues » provenant de l'industrie pétrolière.

Ces esters appelés souvent « polyesters » sont en fait des molécules « simples » polyfonctionnelles, ayant plusieurs fonctions esters, au nombre de quatre maximum, à la suite d'une estérification sur un polyol, ayant plusieurs fonctions alcool, et non sur des polymères, au sens des macromolécules, à l'exception de deux catégories de produits, que sont les esters complexes résultant de l'estérification avec un diacide et les esters de polyglycérol, le polyglycérol étant un polymère.

Dans tous les « polyols » utilisés pour l'estérification de ces acides gras, ne sont mentionnés que, des molécules ayant plusieurs fonctions alcool comme les polyglycérols, c'est à dire un polymère ayant plusieurs fonction alcool.
Or, il est connu que des documents de l'état de la technique décrivent des procédés d'obtention du polyglycérol par polymérisation catalytique de glycérol, suivie d'une estérification.

Un premier document (US 3,637,774) décrit un procédé de préparation catalytique de polyglycérols qui consiste à polymériser du glycérol par condensation avec élimination de l'eau formée, à une température supérieure à 100°C en présence d'un catalyseur alcalin, le polyglycérol obtenu répondant à la formule :

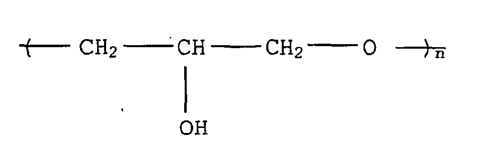

Or, la masse de polyglycérol formée par la polymérisation apparaît être un mélange d'oligomères de glycérol homogène, parce qu'il est constitué d'un seul type de polymère et qu'il peut être estérifié au moyen d'un acide organique.
* Un autre document (US 5,721,305) décrit également un procédé de polymérisation catalytique du glycérol ou de certains de ses dérivés comme le glycidol ou le carbonate de glycérol en mélange avec du glycérol à pression atmosphérique et à une température comprise entre 150°C et 350°C. La masse résultante de la polymérisation est un mélange d'oligomères de glycérol dont certains de ces oligomères peuvent être des oligomères de glycérol monocarbonatés. Ce mélange qui apparaît dès lors, formé d'un seul type de polymère, est un mélange homogène qui peut être facilement estérifié dans cet état de mélange.
* Un autre document RAY C.R.III, GRINSTAFF M.W. : »Polycarbonate and Poly(carbonate-ester)s synthesized from biocompatible building block of glycerol and lactic acid" MACROMOLECULES, vol. 36, 2003, pages 3557-3562, XP002340308, est une publication scientifique qui concerne la synthèse et la caractérisation d'un polycarbonate très particulier et d'un poly(carbonate-ester) par réaction avec l'acide lactique.

Selon ce document, il apparaît que le monomère mis en oeuvre pour la fabrication d'un polycarbonate est particulier et complexe.
En effet, ce monomère est le « 5-benzyloxy-1-3-dioxan-2-one » qui est un carbonate cyclique à six chaînons, spécialement préparé par un procédé en deux étapes et qui ne peut être confondu avec le monomère carbonate de glycérol cyclique ayant par définition cinq chaînons.

En outre, ce monomère est muni d'un groupe protecteur « benzyl » présent tout au long de la réaction de polymérisation. Ainsi des monomères aussi particuliers et complexes et le procédé associé pour assurer la polymérisation ne laissent aucune possibilité de développement économique à l'échelle industrielle, d'un procédé qui apparaît être de laboratoire.

Enfin, l'un des motifs de base répétés est celui du polycarbonate qui répond à la formule générale : 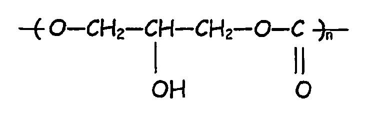 Ce motif apparaît être le poly (2-hydroxy 3-oxo propyl ester) et non le polycarbonate de glycérol, l'autre motif associé étant celui de l'acide lactique et la polymérisation se faisant par l'intermédiaire de l'acide lactique et non par le carbonate.

Mais dans tous les polyols utilisés pour l'estérification des acides gras, ne sont pas mentionnés des polymères et/ou copolymères à base de carbonate de glycérol cyclique à cinq chaînons et de glycérol.

Or :
- le glycérol est un composé organique produit en grande quantité lors de transformations, à l'échelle industrielle, des huiles et des graisses en savons, en acides gras, en esters gras et en particulier, en esters méthyliques d'acides gras. Ce dernier est produit pour le développement des biocarburants.
- Le glycérol apparaît, dès lors, comme une matière première disponible et intéressante pour son faible coût et ses qualités intrinsèques.
- Le glycérol peut être transformé par hétérocyclisation en carbonate de glycérol à plus forte valeur ajoutée (US 2,915,529, EP 0739888, FR 2 778 182) pour des applications dans lesquelles le carbonate de glycérol s'est révélé exceller grâce aux excellentes caractéristiques intrinsèques qu'il offre, le carbonate de glycérol étant un composé :

* bi-fonctionnel ce qui lui permet de jouer un rôle de solvant à l'égard de nombreux composés organiques ou minéraux,
* non toxique et à haut point d'ébullition,
* utilisable comme additif de stabilisation de polymères et d'intermédiaire de synthèse dans des réactions organiques telles que des estérifications, transestérifications, carbamoylation et autres réactions...
* qui peut être mis en oeuvre dans de nombreux domaines tels que la cosmétique, la pharmacie, l'alimentaire.
   - Le glycérol peut aussi être transformé en polymère et/ou copolymères de carbonate de glycérol qui sont des composés polyhydroxylés ayant des qualités intrinsèques importantes telles que une multifonctionnalité, une absence de toxicité et d'écotoxicité, une biodégradabilité, des qualités tribologiques, une stabilité thermique et une bonne résistance à l'oxydation et à l'hydrolyse, un haut pouvoir mouillant, des propriétés rhéologiques, électriques, des qualités hydrophiles qui les rendent hydrosolubles et d'autres encore.

De tels polymères et/ou copolymères ont été décrits dans la demande de brevet français (FR 0408796) en tant que composés polyhydroxylés et procédé de polymérisation catalytique pour les obtenir sous forme d'un mélange de polymères et/ou copolymère en composition organique, mais leur transformation en esters et leur exploitation en tant que tel n'apparaissent pas dans l'état de la technique antérieur à ces travaux.

### OBJECTIFS DE L'INVENTION

Dès lors, l'invention se propose :
- de créer un procédé d'acylation au moins partielle d'au moins un composé polyhydroxylé appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène], et d'obtenir ledit composé polyhydroxylé souhaité au moins partiellement acylé.
- de créer un procédé d'acylation au moins partielle d'au moins un composé polyhydroxylé appartenant au groupe spécifique précité, se trouvant en mélange dans une composition organique formée de polycarbonates de glycérol, de polyglycérols spécifiques, de copolymères [(α-hydroxyméthyl) oxyéthylène/(α-hydroxyméthyl) éthylène carbonate], de copolymères [(α-hydroxalkyl) oxyéthylène/(α-alkyl) éthylène carbonate], de copolymères [(α-alkyl) oxyéthylène/(α-hydroxyalkyl) oxyéthylène], éventuellement en présence de carbonate de glycérol et/ou d'autres carbonates organiques, du glycérol et/ou d'autres composés coproduits et/ou résiduels.
   i) après leur séparation sélective quand ces divers composés sont initialement en mélange ou
   ii) en mélange, suivie d'une extraction séparative de chacun des composés au moins partiellement acylés.
- de créer un procédé d'extraction de chaque constituant de la composition organique,
   i) avant l'acylation collective, suivi de l'acylation au moins partielle du constituant extrait de la composition organique,
   ii) après acylation collective au moins partielle des constituants du mélange.
- de transformer les composés polyhydroxylés appartenant au groupe sélectionné précité en polyesters simples, mixtes, complexes, partiels, totaux, intermoléculaires ou intramoléculaires, par acylation simple, complexe, partielle et totale,
- de disposer des polyesters que sont les polymères et copolymères polyhydroxylés appartenant au groupe sélectionné précité, transformés par acylation en tant que produits,
- de disposer d'intermédiaires de synthèse que seraient les polyesters de polyglycérols spécifiques, de polycarbonates de glycérol et de copolymères au moins partiellement acylés.
- de montrer les principales applications desdits polyesters que sont les polymères et/ou copolymères acylés au moins partiellement, appartenant au groupe sélectionné précité.

### Sommaire de l'invention

Dans l'invention, et tout au long de sa description, l'acylation se définit comme la substitution d'un radical acyle Y-R-CO- à un hydrogène, non lié directement à un carbone, le composé acyle étant représenté par la formule Y-R-CO-X, dans laquelle X peut être -OH (acide)-O-CO-R' (anhydride), Cl (chlorure) ou -O-R' (esters) et Y est H quand le composé acylé est monofonctionnel et Y est -COOH (acide),-CO-O-R" (esters) quand le composé acylé est polyfonctionnel, R, R' et R" étant des chaînes hydrocarbonées en C₁ à C₄₃, saturées ou insaturées, éventuellement fonctionnalisées par des fonctions hydroxyles et/ou époxy, R, R' et R" pouvant être identiques ou différents.

Dans l'invention et tout au long de la description, l'acylation au moins partielle de l'un au moins des composés polyhydroxylés appartenant au groupe constitué par les composés polyhydroxylés que sont les polycarbonates de glycérol, les polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène], signifie que cette acylation selon l'invention desdits composés polyhydroxylés est partielle ou totale.

L'invention concerne les compositions de polyesters au moins partiellement acylés de composés polyhydroxylés en mélange constitué de polycarbonates de glycérol, de polyglycérols spécifiques, de copolymères [(α-hydroxyméthyl) oxyéthylène/(α-hydroxyméthyl) éthylène carbonate], de copolymères [(α-hydroxyalkyl) oxyéthylène/(α-hydroxyalkyl) éthylène carbonate], de copolymères [(α-alkyl) oxyéthylène/(α-hydroxyalkyl) oxyéthylène], caractérisées en ce que lesdits polyesters au moins partiellement acylés des composés polyhydroxylés répondent aux formules générales suivantes dans lesquelles k est le taux d'acylation compris entre 0,01 et 1, bornes incluses :
a) pour les polyesters des polycarbonates de glycérol au moins partiellement acylés : 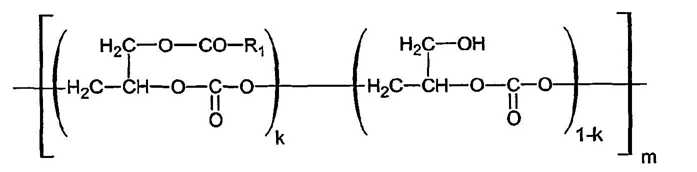 dans laquelle « m » est au moins égal à 2, qui peut prendre une valeur comprise entre 2 et 100, bornes incluses.
b) pour les polyesters des polyglycérols spécifiques au moins partiellement acylés :
b1) 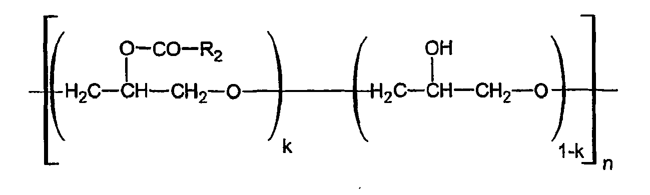 et/ou b2) 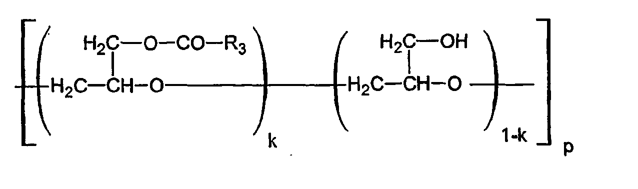 dans laquelle « n » et « p » sont chacun au moins égal à 2 et prennent une valeur comprise entre 2 et 150, bornes incluses.
c) pour les polyesters des copolymères[(α-hydroxyméthyl) oxyéthylène (α-hydroxyméthyl) éthylène carbonate)] au moins partiellement acylés:
c1) 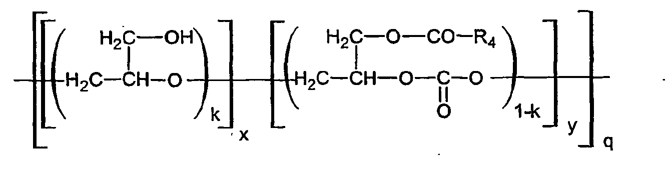 et/ou c2) 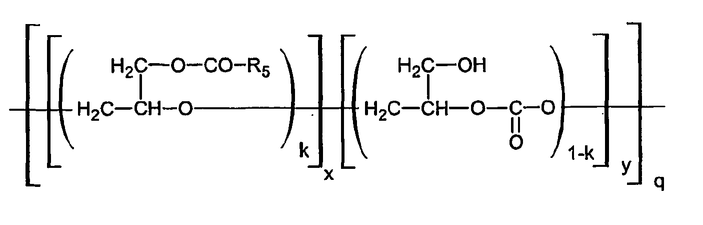 dans lesquelles « x » est au moins égal à 2 et prend une valeur comprise entre 2 et 100, bornes incluses, « y » est au moins égal à 2 et prend une valeur comprise entre 2 et 100, bornes incluses, et « q » est au moins égal à 2 et prend une valeur comprise entre 2 et 100, bornes incluses.
d) pour les polyesters des copolymères [(α-hydroxyalkyl) oxyéthylène/(α-hydroxyalkyl) éthylène carbonate] dans lesquels l'un au moins des α-alkyl 1 ou α-alkyl 2 est une chaîne hydrocarbonée hydroxylée en C₁ à C₄ au moins partiellement acylés, alors que l'autre α-alkyl est H ou une chaîne hydrocarbonée en C₁ à C₄ :
d1) 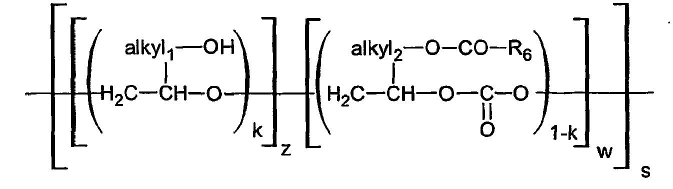 et/ou d2) 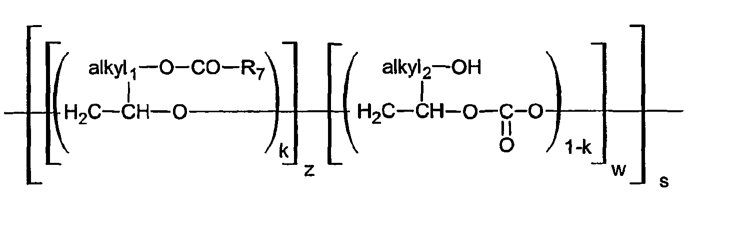 dans laquelle « z » est au moins égal à 2 et prend une valeur comprise entre 2 et 100, « w » est au moins égal à 2 et prend une valeur comprise entre 2 et 100 et « s » est au moins égal à 2 et prend une valeur comprise entre 2 et 100,
e) pour les polyesters des copolymères [(α-alkyl) oxyéthylène/(α-hydroxyalkyl) oxyéthylène] au moins partiellement acylés représentés par la formule générale :
e1) 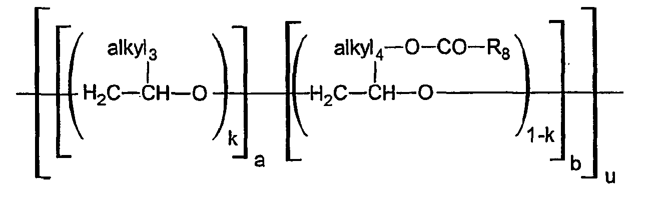 et/ou
e2) 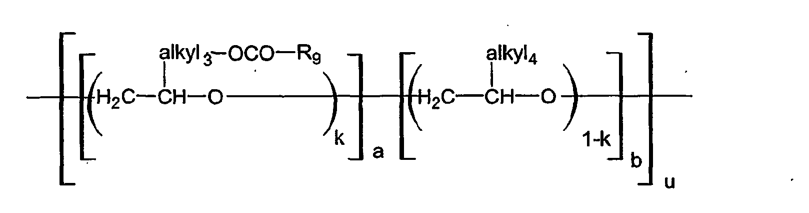 dans laquelle « a » est au moins égal à 2 et prend une valeur comprise entre 2 et 100, « b » est au moins égal à 2 et prend une valeur comprise entre 2 et 100 et « u » est au moins égal à 2 et prend une valeur comprise entre 2 et 100, tandis que l'α-alkyl 3 et α-alkyl 4 sont H ou une chaîne hydrocarbonée en C₁ à C₄,

R₁, R₂, R₃, R₄, R₅, R₆, R₇ R₈ et R₉ étant des chaînes hydrocarbonées en C₁ à C₄₃, saturés ou insaturés, éventuellement fonctionnalisées par des fonctions hydroxyles et/ou époxy et pouvant être identiques ou différents.

L'invention concerne également un procédé catalytique ou non d'acylation au moins partielle de compositions comprenant en mélange des composés polyhydroxylés qui sont des polycarbonates de glycérol, des polyglycérols spécifiques, des copolymère [(α-hydroxyméthyl) oxyéthylène/(α-hydroxyméthyl) éthylène carbonate], des copolymères [(α-hydroxyalkyl) oxyéthylène/(α-hydroxyalkyl) éthylène carbonate], des copolymères [(α-alkyl) oxyéthylène/(α-hydroxyalkyl) oxyéthylène],
"i " seul et après une séparation sélective quand lesdits composés sont initialement en mélange,
"ii " en mélange homogène avec du carbonate de glycérol et/ou d'autres carbonates organiques, du glycérol et/ou d'autres composés coproduits et/ou résiduels.

Le procédé catalytique, selon l'invention, d'acylation au moins partielle de compositions comprenant en mélange des composés polyhydroxylés appartenant qui sont des polycarbonates de glycérol, des polyglycérols spécifiques, des copolymères [(α-hydroxyméthyl) oxyéthylène/(α-hydroxyméthyl) éthylène carbonate], des copolymères [(α-hydroxyalkyl) oxyéthylène/ (α-hydroxy alkyl) éthylène carbonate], des copolymères [(α-alkyl) oxyéthylène/(α-hydroxyalkyl) oxyéthylène] se caractérise en ce que la réaction catalytique d'acylation au moins partielle s'effectue dans un milieu réactionnel hétérogène biphasique, de type liquide/liquide formé des composés polyhydroxylés à acyler et d'un composé d'acylation de formule Y-R-CO-X, dans lequel X peut être -OH (acide), -O-CO-R' (anhydride), Cl (chlorure) ou -O-R' (esters) et Y est H quand le composé acylé est monofonctionnel et Y est -COOH(acide)-CO-OR" (esters) quand le composé acylé est polyfonctionnel, R, R' et R" sont des chaînes hydrocarbonées en en C₁ à C₄₃, saturées ou insaturées, éventuellement fonctionnalisées par des fonctions hydroxyles et/ou époxy, R, R' et R" étant identiques ou différents, milieu réactionnel :
(i) dans lequel le catalyseur est dispersé quand il ne se forme pas in situ dès l'amorce de la réaction d'acylation
(ii) qui est porté à une température d'au plus 220°C
(iii) qui est soumis à une pression comprise entre 10⁵ Pascal et 1,5 10² Pascal, au cours de la réaction
(iv) qui est soumis à une agitation mécanique tout au long de la réaction.

L'invention concerne également un procédé d'extraction sélective de chaque composé polyhydroxylé appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène], quand ces composés polyhydroxylés sont en mélange, avant ou après l'acylation au moins partielle.

L'invention concerne enfin les nombreuses applications auxquelles au moins un des composés polyhydroxylés précités au moins partiellement acylés peut être dédié.

### DESCRIPTION DETAILLEE DE L'INVENTION

Les composés polyhydroxylés à acyler au moins partiellement selon l'invention appartiennent au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-hydroxyalkyl) éthylène carbonate], les copolymères [(α-alkyl) oxyéthylène/(α-hydroxyalkyl) oxyéthylène].

### Origine des composés polyhydroxylés à acyler au moins partiellement :

Chacun de ces composés polyhydroxylés à acyler au moins partiellement appartenant au groupe sélectionné précité, peut être obtenu par voie de synthèse catalytique, de façon isolée après extraction ou associée à d'autres composés polyhydroxylés.

Dans le cas où le composé polyhydroxylé à acyler au moins partiellement est associé à au moins un autre composé polyhydroxylé, il peut être issu d'une composition organique de synthèse contenant en mélange des polycarbonates de glycérol, de polyglycérols spécifiques, des copolymères [(α-hydroxyméthyl) oxyéthylène/(α-hydroxyméthyl) éthylène carbonate], éventuellement des copolymères [(α-hydroxyalkyl) oxyéthylène/(α-alkyl) éthylène carbonate], éventuellement des copolymères [(α-alkyl) oxyéthylène/(α-hydroxyalkyl) oxyéthylène], ladite composition organique étant produite, par exemple, selon la demande de brevet français FR 0408796, par une polymérisation catalytique dans un milieu réactionnel hétérogène comportant une phase liquide organique formée d'au moins un composé donneur de fonctions hydroxyles qui est en particulier le glycérol et d'au moins un composé donneur de fonctions carbonates qui peuvent être de l'urée, du carbonate de glycérol ou un carbonate organique, une phase solide pouvant être ou non solubilisée formée d'un catalyseur contenant des sites actifs au sens de Lewis ou de Bronsted et une phase gazeuse ambiante formée de gaz produits in situ.

Toutefois, la composition organique résultant de la polymérisation catalytique précitée peut contenir également du carbonate de glycérol et/ou d'autres carbonates organiques, et/ou d'autres composés coproduits et/ou résiduels et du glycérol quand ledit glycérol est le donneur de fonctions hydroxyles en particulier quand la quantité initiale du composé donneur de fonctions hydroxyles dans le milieu réactionnel est déséquilibrée par rapport à la quantité initiale du composé donneur de fonctions carbonates.

Tous ces composés que sont le carbonate de glycérol et/ou d'autres carbonates organiques et/ou d'autres composés coproduits et/ou résiduels, et le glycérol sont éventuellement éliminés préalablement à l'acylation au moins partielle de l'un au moins des composés polyhydroxylés appartenant au groupe précité.

Plus précisément, la composition organique résultant de la polymérisation catalytique précitée, dès lors qu'elle est expurgée du carbonate de glycérol et/ou d'autres carbonates organiques, du glycérol et des coproduits de la réaction de polymérisation, se distingue par le fait qu'elle peut contenir des composés organiques polyhydroxylés à acyler au moins partiellement à raison :
- de 5% en poids à 85% en poids de polycarbonate de glycérol
- de 15% en poids à 50% en poids de polyglycérol spécifique
- de 0,1% à 50% en poids de poly[(α-hydroxyméthyl) oxyéthylène/(α-hydroxyméthyl éthylène carbonate)]
- de 0% à 50% en poids de copolymères [(α-hydroxyalkyl) oxyéthylène/(α-alkyl) éthylène carbonate]
- de 0% à 50% en poids de copolymères [(α-alkyl) oxyéthylène/(α-hydroxyalkyl) oxyéthylène],

### Acylation au moins partielle de l'un au moins des composés polyhydroxylés appartenant au groupe sélectionné :

L'acylation au moins partielle selon l'invention de l'un au moins des composés polyhydroxylés appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène], peut, dès lors, être effectuée.
- sur un seul des composés polyhydroxylés appartenant au groupe sélectionné précité, obtenu par synthèse directe ou par une extraction sélective d'une composition organique contenant en mélange avec d'autres composés, le composé polyhydroxylé souhaité,
- sur les composés polyhydroxylés sélectionnés appartenant au dit groupe, en mélange dans une composition organique résultant d'une polymérisation catalytique.

Quand l'acylation au moins partielle selon l'invention, concerne un seul composé polyhydroxylé, du groupe sélectionné précité obtenu isolément par synthèse, l'acylation est conduite sur ce seul composé polyhydroxylé souhaité selon les conditions propres à l'acylation catalytique au moins partielle.

Quand l'acylation au moins partielle selon l'invention, concerne un seul composé polyhydroxylé souhaité appartenant au groupe sélectionné et que le composé polyhydroxylé est contenu, en mélange, dans une composition organique résultant d'une polymérisation catalytique, une extraction sélective dudit composé souhaité est pratiquée par une méthode séparative connue de l'état de la technique, préalablement à l'acylation au moins partielle dudit composé souhaité.

De telles méthodes séparatives connues sont par exemple:
- une séparation par chromatographie préparative sur gel perméable (méthode GPC),
- une extraction par un mélange liquide/liquide,
- une distillation classique ou une distillation moléculaire ou à « court chemin »,
- la méthode SMB connue sous la dénomination (« Simulated Moving Bead »).

Dès lors, par l'une ou l' autre de ces méthodes connues, peuvent être isolés puis extraits les polymères et copolymères polyhydroxylés à acyler au moins partiellement présents dans la composition organique selon l'invention, c'est-à-dire :
- les polycarbonates de glycérol
- des polyglycérols spécifiques
- les copolymères [(α-hydroxyméthyl) oxyéthylène/(α-hydroxyméthyl) éthylène carbonate)] et les copolymères [(α-hydroxyalkyl) oxyéthylène/(α-alkyl) éthylène carbonate], les copolymères [(α-alkyl) oxyéthylène/(α-hydroxyalkyl) oxyéthylène].

Les polymères et copolymères polyhydroxylés à acyler au moins partiellement selon l'invention, sont de structures majoritairement linéaires. Toutefois, il est possible de trouver dans ladite composition des polymères et copolymères ramifiés, voire cycliques dans le cas de la présence d'oligomères, ou encore dont les terminaisons des chaînes polymères sont cycliques.

Quand l'acylation au moins partielle selon l'invention, s'effectue sur au moins un composé polyhydroxylé appartenant au groupe sélectionné précité, cette acylation au moins partielle peut être conduite, sur une composition organique formée par le mélange des composés polyhydroxylés souhaités appartenant au groupe précité ou sur une composition organique contenant en mélange non seulement les composés polyhydroxylés sélectionnés que sont les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthyléne/(α-hydroxyalkyl) oxyéthylène], mais également d'autres composés qui sont du carbonate de glycérol et/ou d'autres carbonates organiques, du glycérol et/ou d'autres composés coproduits et/ou résiduels, l'acylation au moins partielle s'effectuant en présence ou après l'élimination du carbonate de glycérol et/ou d'autres carbonates organiques, du glycérol et/ou d'autres composés coproduits et/ou résiduels.

Ainsi selon l'invention, l'acylation au moins partielle de l'un au moins des composés polyhydroxylés appartenant au groupe sélectionné précité en créant les polyesters correspondants peut être conduite sur :
- l'un des composés polyhydroxylés appartenant au groupe sélectionné précité,
- l'un au moins des composés polyhydroxylés appartenant au groupe sélectionné précité, en produisant le polyester souhaité,
- sur une composition organique contenant, en mélange non seulement les composés polyhydroxylés appartenant au groupe sélectionné précité, mais aussi d'autres composés qui sont du carbonate de glycérol et/ou d'autres carbonates organiques, du glycérol et/ou d'autres composés coproduits et/ou résiduels,
- sur une composition organique contenant en mélange, les seuls composés polyhydroxylés que sont les polymères et copolymères après avoir expurgé cette composition des autres composés,
- sur une composition organique contenant en mélange les seuls composés polyhydroxylés que sont les polycarbonates de glycérol et des polyglycérols spécifiques après avoir expurgé cette composition des autres composés,
- sur une composition organique contenant en mélange les seuls polycarbonates de glycérol et les copolymères associés après avoir expurgé cette composition des autres composés,
- sur une composition organique contenant en mélange les polycarbonates de glycérol ou des polyglycérols spécifiques ou les copolymères associés après avoir expurgé ladite composition des autres composés.

Les types d'acylation au moins partielle :

Selon l'invention, l'acylation au moins partielle, c'est-à-dire partielle ou totale, de l'un au moins des composés polyhydroxylés appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène], qui crée les polyesters correspondants, peut être :
- de type acylation simple, partielle ou totale et procède de la réaction d'un seul composé d'acylation qui est un monoacide carboxylique de formule R-COOH ou un chlorure d'acide de formule R-CO-Cl en quantité au moins sous stoéchiométrique comportant une chaîne hydrocarbonée en C₁ à C₄₃, saturée ou insaturée, éventuellement fonctionnalisé par des fonctions hydroxyles et/ou époxy, avec au moins un composé polyhydroxylé appartenant au groupe sélectionné précité,
- de type acylation simple-mixte, partielle ou totale et procède de la réaction d'au moins deux composés d'acylation qui sont des acides monocarboxyliques R-COOH différents ou des chlorures d'acide R-CO-Cl différents, en quantité cumulée au moins sous stoéchiométrique comportant une chaîne hydrocarbonée en C₁ à C₄₃, saturée ou insaturée, éventuellement fonctionnalisé par des fonctions hydroxyles et/ou époxy, en quantité sous stoéchiométrique avec au moins un composé polyhydroxylé appartenant au groupe sélectionné précité,
- de type acylation complexe-simple, partielle ou totale et procède de la réaction d'un seul composé d'acylation qui est un diacide carboxylique HO-CO-R-CO-OH aliphatique ou aromatique ou un triacide carboxylique, par exemple un acide résinique maléisé
   ou fumarisé, ou un anhydride d'acides carboxyliques R-CO-0-COR', comportant des chaînes hydrocarbonées R et R' en C₁ à C₄₃, saturées ou insaturées, éventuellement fonctionnalisé par des fonctions hydroxyles et/ou époxy, en quantité au moins sous stoéchiométrique avec au moins un composé polyhydroxylé appartenant au groupe sélectionné précité, pouvant conduire :
   - à une acylation partielle ou totale intermoléculaire par réaction de site à site, entre chaque site acide du composé d'acylation dicarboxylique ou tricarboxylique et un site hydroxylé appartenant à des chaînes distinctes de composés polyhydroxylés que sont les polymères et/ou copolymères polyhydroxylés du groupe sélectionné, en créant d'abord un pontage entre au moins deux molécules de l'un au moins des polymères et/ou copolymères polyhydroxylés et au moins une molécule de composé d'acylation, puis de proche en proche, un réseau maillé par d'autres réactions intermoléculaires.
   - à une acylation partielle ou totale intramoléculaire par une réaction de site à site entre les deux sites acides du composé d'acylation dicarboxylique ou tricarboxylique et des sites hydroxylés d'une chaîne de polymères et/ou copolymères polyhydroxylés du groupe sélectionné.

Le cas du triacide est également comparable comme précédemment où des liaisons inter et intramoléculaires peuvent avoir lieu.
- de type acylation complexe-mixte, partielle ou totale et procède de la réaction d'au moins deux composés d'acylation qui sont des acides au moins dicarboxyliques HO-CO-R-CO-OH différents ou des anhydrides d'acides carboxyliques R-CO-O-CO-R' différents comportant des chaînes hydrocarbonées R et R' en C₁ à C₄₃, saturées ou insaturées, éventuellement fonctionnalisées par des fonctions hydroxyles et/ou époxy, en quantité au moins sous stoéchiométrique, avec au moins un composé polyhydroxylé appartenant au groupe sélectionné précité, pouvant conduire :
   - à une acylation partielle ou totale intermoléculaire par réaction de site à site, entre chaque site acide de chaque composé d'acylation dicarboxylique ou tricarboxylique et un site hydroxylé appartenant à des chaînes distinctes de composés polyhydroxylés que sont les polymères et/ou copolymères polyhydroxylés du groupe sélectionné, en créant d'abord un pontage entre au moins deux molécules de l'un au moins des polymères et/ou copolymères polyhydroxylés, et au moins une molécule de chaque composé d'acylation dicarboxylique, puis de proche en proche, un réseau maillé par d'autres réactions intermoléculaires.
- à une acylation partielle ou totale intramoléculaire par une réaction de site à site entre les deux sites acides de l'un des composés d'acylation dicarboxylique ou tricarboxylique et des sites hydroxylés d'une même chaîne de l'un des polymères et/ou copolymères polyhydroxylés et entre les deux sites acides d'un autre des composés d'acylation dicarboxylique et deux sites hydroxylés de la même chaîne ou d'une autre chaîne de l'un ou de plusieurs des polymères et/ou copolymères polyhydroxylés.
   - de type acylation par transestérification simple, partielle ou totale qui s'effectue par la réaction d'un composé d'acylation qui est un monoester R-CO-O-R' en quantité au moins sous stoéchiométrique, dans laquelle R et R' sont des chaînes hydrocarbonées en C₁ à C₄₃, saturées ou insaturées, éventuellement fonctionnalisées par des fonctions hydroxyles et/ou époxy, R et R' pouvant être identiques ou différents, avec au moins un composé polyhydroxylé appartenant au groupe sélectionné précité.
   - de type acylation par transestérification simple-mixte, partielle ou totale, qui procède de la réaction d'au moins deux composés d'acylation qui sont des monoesters R-CO-O-R' et R " - CO-O-R " ' en quantités cumulées au moins sous stoéchiométrique dans lesquelles R, R', R " et R"' sont des chaînes hydrocarbonées en C₁ à C₄₃, saturées ou insaturées, éventuellement fonctionnalisées par des fonctions hydroxyles et/ou époxy, R, R', R" et R"' pouvant être identiques sous réserve que R ou R' soit différent de R" et R"' ou différents, avec au moins un composé polyhydroxylé appartenant au groupe sélectionné précité.
   - de type acylation par transestérification complexe-simple ou complexe-mixte, partielle ou totale, qui s'effectue par la réaction d'au moins un seul composé d'acylation qui est au moins un polyesterde formule R'-O-CO-R-CO-O-R", ou un monoester d'un polyacide carboxylique de formule R'-O-CO-R-CO-OH dans lesquelles R, R' et R" sont des chaînes hydrocarbonées en C₁ à C₄₃, saturées ou insaturées, en quantité au moins sous stoéchiométrique éventuellement fonctionnalisées par des fonctions hydroxyles et/ou époxy, avec au moins un composé polyhydroxylé appartenant au groupe sélectionné précité.

Dans ces deux types d'acylation, les groupes acyles sont fournis préférentiellement par les acides gras dimères, esters partiels d'acides gras dimères, diesters d'acides gras dimères ayant de 2 à 36 atomes de carbone ou par les acides gras trimères, esters partiels d'acides gras trimères, triester d'acides gras trimères issus d'acides résiniques des bois de pin et par tout autre acide gras polyinsaturé d'origine végétale ou de synthèse oxo.

Dans ce cas de transestérification complexe, il est possible que les liaisons puissent être intra ou intermoléculaires.

Ainsi selon l'invention, l'acylation au moins partielle, c'est-à-dire partielle ou totale de l'un au moins des composés polyhydroxylés appartenant au groupe sélectionné, conduit à des polyesters au moins partiellement acylés, de type simple, simple-mixte, complexe-simple intermoléculaires ou intramoléculaires , complexe-mixte intermoléculaires ou intramoléculaires ou transestérifié simple, simple-mixte, intra ou intermoléculaires.

### Caractérisation des polyesters après acylation au moins partielle :

Chacun des polyesters des composés polyhydroxylés appartenant au groupe sélectionné précité au moins partiellement acylé, peut être caractérisé par la détection des diverses caractéristiques physico-chimiques le concernant. Il en est de même lorsque les polyesters des composés polyhydroxylés appartenant au groupe sélectionné précité, sont, au moins pour l'un d'entre eux, au moins partiellement acylé en mélange dans une composition organique résultant d'une polymérisation catalytique.

Toutefois, il est possible de caractériser les polyesters des composés polyhydroxylés, dont l'un au moins est au moins partiellement acylé, par des méthodes connues d'analyses ou de mesures de caractéristiques spécifiques, telles que par exemple :
- par la mesure du taux d'hydroxyle sur les composés polyhydroxylés, du milieu réactionnel avant puis après une acylation au moins partielle qui permet de mesurer le taux d'acylation et qui permet d'également de de préciser l'importance de l'acylation au moins partielle (Norme NFT 60/213), au moyen des liaisons -OH encore disponibles,,
- par la mesure de la viscosité exprimée en centistoke (cSt), qui est réalisées avant puis après une acylation au moins partielle à l'aide d'un viscosimètre Canon-Fenske à 40°C (Norme NFT 60/200, NFT 60/136 et ASTMD 445-96),
- par analyse spectroscopique infra-rouge,

### Hydrosolubilité - liposolubilité des polyesters selon l'invention :

L'acylation au moins partielle selon l'invention de l'un au moins des composés polyhydroxylés appartenant au groupe sélectionné précité, peut transformer chacun de ces composés polyhydroxylés initialement totalement hydrosolubles, en des polyesters simples, complexes, mixtes, partiels, totaux, intermoléculaires et intramoléculaires, lipophiles et liposolubles dans les corps gras, selon le taux d'acylation « K » pratiqué sur chacun d'entre eux, K étant compris dans l'intervalle 0,01 ≤ K ≤1, bornes incluses.

Plus particulièrement, l'acylation selon l'invention des composés polyhydroxylés du groupe sélectionné précité, transforme progressivement et selon le taux d'acylation pratiqué, ces composés polyhydroxylés initialement hydrosolubles en des polyesters complètement liposolubles et hydrophobes, après être passés par des caractéristiques intermédiaires d'hydrosolubilité et de liposolubilité simultané, l'état intermédiaire d'hydrosolubilité et de liposolubilité possible traduisant le degré de substitution des groupes hydroxyles en groupes acylés qui va dépendre du groupe de composés polyhydroxylés et de la longueur des chaînes substituantes d'acylation.

Chacun des polyesters des composés polyhydroxylés au moins partiellement acylés peut être mis en oeuvre seul ou sous la forme d'un mélange des composés polyhydroxylés appartenant au groupe sélectionné précité dont l'un au moins des composés polyhydroxylés, est au moins partiellement acylé.

### Réactivité des polyesters selon l'invention :

Les polyesters selon l'invention de polycarbonate de glycérol, de polyglycérols spécifiques et de leurs copolymères sont constitués de sites réactifs particulièrement intéressants, utilisables comme intermédiaires de synthèse :
- Un squelette glycérylique constitué de deux unités oxyéthylène/éthylène carbonate substitué par des fonctions hydroxyméthyl acylés ou hydroxyméthyl libres. Ces groupes hydroxyméthyles acylés sous forme ester et les fonctions carbonates -O(C=O)O représentent des centres réactionnels fonctionnalisables.
- En présence du réactif de Lawesson, les groupements carbonates -O(C =O)O et carboxyester (C =O)O- sont modifiés en groupements thionocarbonates -O(C =S)O, thionoester (C =S)O-. Se forment ainsi des polythionoesters de polythionocarbonate de glycérol susceptibles de conférer les propriétés anti-usure et extrême pression par la présence de soufre organique pour la lubrification.
- Les groupes hydroxyméthyles libres sont le siège des réactions d'alkylation pour l'obtention des O-alkyl (poly)ester de polyesters de polycarbonate de glycérol. La liaison C-O-alkyl renforce la stabilité thermique, chimique et physique de l'ensemble moléculaire ainsi que le caractère hydrophobe .
- Des réactions de condensation, car l'hydrogène mobile de l'hydroxyméthyle réagit avec des fonctions isocyanato, isothiocyanato des isocyanates (mono-, di-) ou des isothiocyanates pour transformer les centres réactionnels en fonction uréthanes. Particulièrement, dans le cas des estérifications partielles, cette condensation procure le moyen de fabriquer des polyuréthanes de polyesters de polycarbonate de glycérol utilisables dans les industries de matériaux, de revêtements, peintures, lubrifiants...
- Des réactions d'hydroxy alkylation par la mise en oeuvre des sites d'époxy dans notamment ceux fournis par les huiles végétales époxydées (colza époxydé, soja époxydé...) pour transformer les centres réactionnels impliqués en fonctions hydroxy et O-alkyl. Des polyesters de polycarbonate polyhydroxylés et polyéthers sont attendus. Leur intérêt réside dans la présence des fonctions hydroxyles sur le squelette hydrocarboné des chaînes courtes, moyennes, longues, issues des végétaux. Le haut degré d'hydroxyle engendre des néopolyols oléochimiques.
- Les doubles liaisons des chaînes oléiques et linoléiques des chaînes esters qui peuvent être fonctionnalisées en époxydes, en présence par exemple d'acide formique et de peroxyde d'hydrogène, puis transformées en amide avec des amines et en présence par exemple de monochloroacétate de sodium peuvent être transformées en ammonium quaternaire, fonction très recherchée par sa cationnicité.
- Des réactions d'hydroxylation sur les doubles liaisons éthyléniques des groupes acyles fournis par les acides gras des huiles oléiques, éruciques, linoléique, linolénique pour l'obtention des polyols oléochimiques de haute densité hydroxy.

### Procédé catalytique d'acylation au moins partielle de l'un au moins des composés polyhydroxylés appartenant au groupe des composés sélectionnés précités :

L'invention concerne également un procédé catalytique d'acylation au moins partielle de l'un au moins des composés polyhydroxylés appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène].
"i"- seul et après une séparation sélective quand lesdits composés sont initialement en mélange,
"ii "- en mélange homogène avec du carbonate de glycérol et/ou d'autres carbonates organiques, du glycérol et/ou d'autres composés coproduits et/ou résiduels.

Le procédé catalytique, selon l'invention, d'acylation au moins partielle de l'un au moins des composés polyhydroxylés appartenant au groupe constitué par les polycarbonates de glycérol, des polyglycérols spécifiques, les copolymères [(α-hydroxyméthyl) oxyéthylène/(α-hydroxyméthyl) éthylène carbonate], les copolymères [(α-hydroxyalkyl) oxyéthylène/(α-alkyl) éthylène carbonate], les copolymères [(α-alkyl) oxyéthylène/(α-hydroxyalkyl) oxyéthylène] se caractérise en ce que la réaction catalytique d'acylation au moins partielle s'effectue dans un milieu réactionnel hétérogène biphasique, de type liquide/liquide formé d'au moins un des composés polyhydroxylés du groupe précité à acyler et d'au moins un composé d'acylation de formule Y-R-CO-X, dans lequel X peut être -OH (acide),-O-CO-R' (anhydride), Cl (chlorure) ou -O-R' (esters) et Y est H quand le composé acylé est monofonctionnel, et est -COOH (acide),-CO-O-R " (esters) quand le composé acylé est au moins bi-fonctionnel, milieu réactionnel hétérogène biphasique:
(i) dans lequel le catalyseur est dispersé, quand il ne se forme pas in situ dès l'amorce de la réaction
(ii) qui est porté à une température d'au plus 220°C
(iii) qui est soumis à une pression comprise entre 10⁵ Pascal et 1,5 10² Pascal, au cours de la réaction
(iv) qui est soumis à une agitation mécanique tout au long de la réaction.

Selon le procédé de l'invention, les quantités de composés polyhydroxylés appartenant au groupe sélectionné précité donneurs de fonctions hydroxyles et de composé d'acylation introduites dans le milieu réactionnel, dépendent du taux d'acylation « K » souhaité et du taux d'hydroxyle du composé polyhydroxylé à acyler.

D'une manière générale, la quantité du composé d'acylation introduite dans le milieu réactionnel est choisie comprise entre 0,4 fois et 6 fois la quantité stoéchiométrique pour une acylation, étant entendu que lors d'une acylation partielle, la réaction d'acylation est arrêtée au moment où la structure chimique désirée est obtenue :

### Les composés d'acylation

Les composés d'acylation Y-R-CO-X intervenant dans le procédé selon l'invention sont choisis :
a) dans le cas d'une acylation de type simple partielle ou totale, qui comporte la réaction d'un seul composé d'acylation avec l'un au moins des composés polyhydroxylés, dans le groupe constitué par les acides monocarboxyliques de formule R-COOH, et/ou les chlorures d'acides carboxyliques de formule R-CO-Cl dans lesquelles R est une chaîne hydrocarbonée en C₁ à C₄₃, saturée ou insaturée, éventuellement fonctionnalisée par des fonctions hydroxyles et/ou époxy.
b) dans le cas d'une acylation de type simple-mixte, partielle ou totale, qui comporte la réaction d'au moins deux composés d'acylation différents avec l'un au moins des composés polyhydroxylés du groupe sélectionné, dans le groupe constitué par les acides monocarboxyliques de formule RCOOH, et/ou les chlorures d'acides carboxyliques de formule R-CO-Cl dans lesquelles R est une chaîne hydrocarbonée en C₁ à C₄₃, saturée ou insaturée, éventuellement fonctionnalisée par des fonctions hydroxyles et/ou époxy.
   Les acides monocarboxyliques sont préférentiellement choisis dans le groupe constitué par les acides gras, en particulier ceux d'origine végétale ou animale avec une chaîne hydrocarbonée linéaire ou ramifiée de C1 à C43 :
   - saturés : par exemple l'acide laurique, palmitique ou isopalmitique, stéarique, arachidique, ou autres,
   - ou insaturés :
      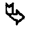 avec une seule insaturation comme par exemple, l'acide oléique, l'acide érucique ou autres ,
      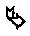 avec une double insaturation, comme par exemple, l'acide linoléique, ou autres.

   Les chlorures d'acide sont, préférentiellement ceux choisis dans le groupe constitué par les acides monocarboxyliques précités transformés en chlorure d'acide.
c) dans le cas d'une acylation de type complexe-simple, partielle ou totale, qui comporte la réaction d'un seul composé d'acylation avec l'un au moins des composés polyhydroxylés du groupe sélectionné, dans le groupe constitué par les diacides carboxyliques HO- OC-R-CO-OH aliphatiques ou aromatiques ou les triacides carboxyliques, aliphatiques ou aromatiques, tel que par exemple un acide résinique maléisé ou fumarisé, et/ou les anhydrides d'acides carboxyliques R-CO-O-CO-R' comportant des chaînes hydrocarbonées R et R' en C₁ à C₄₃, saturées ou insaturées, éventuellement fonctionnalisées par des fonctions hydroxyles et/ou époxy, les diacides carboxyliques pouvant être préférentiellement choisis dans le groupe des acides dimères en C₆ à C₂₁ et les anhydrides issus du groupe constitué par les acides gras en C₂ à C₁₈ :
   - C1) à une acylation partielle ou totale intermoléculaire par réaction de site à site, entre chaque site acide du composé d'acylation dicarboxylique et un site hydroxylé appartenant à deux chaînes distinctes l'une de l'autre de composés polyhydroxylés que sont les polymères et/ou copolymères polyhydroxylés du groupe sélectionné, en créant d'abord un pontage par le biais des fonctions acides et des fonctions hydroxyles entre au moins deux molécules de l'un au moins des polymères et/ou copolymères polyhydroxylés du groupe sélectionné, puis de proche en proche, un réseau maillé par d'autres réactions intermoléculaires.
   - C2) à une acylation partielle ou totale intramoléculaire par une réaction de site à site entre les deux sites acides du composé d'acylation dicarboxylique et deux sites hydroxylés d'une chaîne de polymères et/ou copolymères polyhydroxylés du groupe sélectionné.

   Dans ces acylations intermoléculaires et intramoléculaires, les acides dicarboxyliques sont, préférentiellement choisis dans le groupe constitué par les acides gras tel que l'acide glutarique, adipique, pimélique, subérique, azélaïque, sébacique, tridécanoïque.
d) dans le cas d'une acylation de type complexe-mixte, partielle ou totale qui comporte la réaction d'au moins deux composés d'acylation avec l'un au moins des composés polyhydroxylés, dans le groupe constitué par les acides dicarboxyliques HO-CO-R-CO-OH différents ou les anhydrides d'acides carboxyliques R-CO-O-CO-R' différents l'un de l'autre comportant des chaînes hydrocarbonées R et R' en C₁ à C₄₃, saturées ou insaturées, éventuellement fonctionnalisées par des fonctions hydroxyles et/ou époxy, les diacides carboxyliques pouvant être préférentiellement choisis dans le groupe des acides dimères en C₆ à C₂₁ et les anhydrides issus du groupe constitué par les acides gras comportant des chaînes hydrocarbonées R et R' en C₁ à C₄₃, saturées ou insaturées, éventuellement fonctionnalisées par des fonctions hydroxyles et/ou époxy, les anhydrides d'acides carboxyliques pouvant être préférentiellement choisis dans le groupe des acides gras en C₂ à C₁₈. Ce type d'acylation complexe-mixte, partielle ou totale, peut également conduire :
   - d1) à une acylation complexe-mixte, partielle ou totale, intermoléculaire par réaction de site à site, entre chaque site acide de chaque composé d'acylation dicarboxylique et un site hydroxylé appartenant à deux chaînes distinctes de polymères et/ou copolymères polyhydroxylés, en créant d'abord un pontage entre au moins deux molécules de polymères et/ou copolymères polyhydroxylés, avec chaque composé d'acylation dicarboxylique, puis de proche en proche, un réseau maillé par d'autres réactions intermoléculaires.
   - d2) à une acylation complexe-mixte, partielle ou totale, intramoléculaire par une réaction de site à site entre les deux sites acides de l'un des composés d'acylation dicarboxylique et deux sites hydroxylés d'une même chaîne de l'un des polymères et/ou copolymères polyhydroxylés et entre les deux sites acides d'un autre des composés d'acylation dicarboxylique et deux sites hydroxylés de la même chaîne ou d'une autre chaîne de l'un des polymères et/ou copolymères polyhydroxylés.

   Dans le cas d'une acylation complexe, simple ou mixte, partielle
   ou totale, pouvant conduire à des acylations intermoléculaires et/ou intramoléculaires, ladite acylation est effectuée :
   - par les acides au moins dicarboxyliques de formule générale HO-CO-R-CO-OH ou
   - par les anhydrides de diacides de formule R-CO-O-CO-R':
   dans lesquelles R et R' sont des chaînes hydrocarbonées en C₁ à C₄₃, saturées ou insaturées, éventuellement fonctionnalisées par des fonctions hydroxyles et/ou époxy, R et R' pouvant être identiques ou différents, avec au moinsun composé polyhydroxylé appartenant au groupe sélectionné précité, ces acides au moins dicarboxyliques étant préférentiellement choisis dans le groupe constitué par l'acide glutarique, l'acide adipique, l'acide pimélique, l'acide subérique, l'acide azélaïque, l'acide sébacique, l'acide dodécanedioïque, et les anhydrides d'acides carboxyliques étant préférentiellement choisis dans le groupe constitué par anhydride acétique, anhydride hexanoïque, anhydride oléique.
e) dans le cas d'une acylation de type transestérification simple, mixte, partielle ou totale, qui comporte la réaction d'au moins un composé d'acylation avec au moins l'un des composés polyhydroxylés :
e1) Quand l'acylation par transestérification est simple partielle ou totale qui comporte la réaction d'un seul composé d'acylation avec au moins l'un des composés polyhydroxylés, dans le groupe constitué par les monoesters de formule R-CO-O-R', dans lesquels R et R' sont des chaînes hydrocarbonées en C₁ à C₄₃, saturées ou insaturées, éventuellement fonctionnalisées par des fonctions hydroxyles et/ou époxy, R et R' pouvant être différents les uns des autres.
e2) Quand l'acylation par transestérification est simple-mixte partielle ou totale, , qui comporte la réaction d'au moins deux composés d'acylation avec au moins l'un des composés polyhydroxylés dans le groupe constitué par les monoesters de formule R-CO-O-R' et R-CO-O-R" dans lesquelles R, R' et R" sont des chaînes hydrocarbonées en C₁ à C₄₃, saturées ou insaturées, éventuellement fonctionnalisées par des fonctions hydroxyles et/ou époxy, R' et R" devant être différents l'un de l'autre.
   Dans le cas d'une acylation par transestérification simple, simple-mixte, partielle ou totale, les monoesters sont préférentiellement choisis dans le groupe constitué par les esters méthyliques d'huiles de coco, de palme, de colza, de tournesol et de ricin.
f) dans le cas d'une acylation de type transestérification complexe-simple ou complexe-mixte, partielle ou totale, qui comporte la réaction d'au moins un composé d'acylation avec au moins l'un des composés polyhydroxylés pouvant conduire à des acylations inter et/ou intramoléculaires, dans le groupe constitué par les esters d'acides au moins dicarboxyliques, de formule R-CO-O-R-CO-O-R" , ou par un ester-acide d'acides au moins dicarboxyliques de formule R-CO-O-R-CO-OH, R, R' et R" étant des chaînes hydrocarbonées en C₁ à C₄₃, saturées ou insaturées, éventuellement fonctionnalisées par des fonctions hydroxyles et/ou époxy R, R'et R" étant identiques ou différents,

Dans le cas d'une acylation par transestérification complexe-simple ou complexe-mixte, partielle ou totale, les esters d'acides au moins dicarboxyliques et les esters-acides d'acides au moins dicarboxyliques sont choisis préférentiellement dans le groupe constitué par les esters des acides gras dimères, les diesters d'acides gras dimères en C₆ à C₂₁, les esters d'acides gras trimères, les triesters d'acides trimères.

### LE CATALYSEUR :

Le catalyseur intervenant dans la réaction catalytique d'acylation au moins partielle, selon l'invention, de l'un au moins des composés polyhydroxylés appartenant au groupe sélectionné précité, est choisi en fonction de la nature de la réaction d'acylation partielle ou totale. Deux groupes de catalyseurs sont à distinguer pour activer l'acylation :
- le groupe des catalyseurs acides homogènes, ou hétérogènes monofonctionnels ou bifonctionnels choisis pour activer l'acylation des composés polyhydroxylés par les chlorures d'acides gras, anhydrides d'acides gras, acides gras monomères, acides gras dimères, acides gras trimères. Le catalyseur d'acylation peut être choisi parmi les acides donneurs de protons dans la famille des catalyseurs homogènes tels que, par exemple, l'acide sulfurique, l'acide phosphorique, l'acide paratoluène sulfonique, l'acide dodecyl sulfonique ou parmi les catalyseurs métalliques porteurs de sites acides de Lewis et de Bronsted tel que, par exemple, dans la famille des sulfates métalliques tel que le sulfate de zinc, le sulfate de magnésium, le sulfate de sodium ou parmi les résines échangeuses de cations aux sites acides forts sulfoniques, nafions ou sites acides faibles carboxyliques, phosphoniques ou encore parmi les zéolithes en particulier les tamis moléculaires, les pulgites, les argiles ou parmi les superacides tels que par exemple, FSO₃H-SbF₅ ou parmi les polyacides.
- le groupe des catalyseurs basiques homogènes ou hétérogènes monofonctionnels ou bifonctionnels sélectionné pour activer l'acylation des composés polyhydroxylés par les monoesters d'alkyles d'acides gras, diesters d'alkyles et d'acides gras, triesters d'alkyles et d'acides gras, triglycérides, diesters d'acides gras dimères, triesters d'acides gras, trimères. Le catalyseur d'acylation est choisi parmi les bases solides minérales tels que les hydroxydes alcalins en particulier l'hydroxyde de sodium et l'hydroxyde de potassium, les hydroxydes alcalino-terreux en particulier ceux de calcium et de baryum les carbonates alcalins tels que carbonate de sodium et carbonate de potassium. ou encore choisis parmi les bases solides organiques tels que les alcoolates métalliques en particulier les méthylates de sodium ou de potassium, les éthylates de sodium ou de potassium , ou encore choisis dans le groupe des sels alcalins et métalliques, des acides carboxyliques organiques , dans le groupe des oxydes métalliques porteurs des sites basiques de Lewis tels que TiO₂ MgO, ZnO et autres, dans le groupe des résines échangeuses d'anions fonctionnalisés sous forme chlorure, hydroxyde, bicarbonate ou sous forme de base libre, et dans le groupe des bases organiques ou supportées acceptrices de liaisons hydrogène, amine libre tels que par exemples la triéthylamine, la pyridine, la guanidine et autres. Le catalyseur selon l'invention est introduit dans le milieu réactionnel à raison de 0,01% en poids à 5 % en poids par rapport au composé polyhydroxylé à acyler introduit dans le milieu réactionnel.

### LES CONDITIONS EXPERIMENTALES : PRESSION ET TEMPERATURE :

Les réactions d'acylation sont réalisées en absence de tiers solvant par un système biphasique liquide hydrophobe/liquide hydrophile, dans des conditions de synthèse où le ratio entre les sites d'acylation de l'agent acylant hydrophobe et les sites de composés polyhydroxylés hydrophiles est au moins égal à 1 et est généralement au plus égal à 3.

La pression appliquée au milieu réactionnel et contrôlée au cours de l'acylation catalytique est au plus de 10⁵ Pascal, mais elle peut être préférentiellement inférieure à cette valeur maximale afin de déplacer l'équilibre réactionnel entre le composé polyhydroxylé et le composé acylé dans le sens de la formation des polyesters et dans le sens de l'élimination de la phase gazeuse qui peut se former in situ. De préférence, la pression appliquée au milieu réactionnel catalytique est préférentiellement comprise entre 2,0.10² et 10⁵ Pascal.

La température à laquelle est porté le milieu réactionnel au cours de la réaction est d'au plus 220°C et préférentiellement choisie dans l'intervalle compris entre 50°C et 200°C.

Le milieu réactionnel hétérogène biphasique est soumis, tout au long de la réaction d'acylation à une agitation mécanique suffisante au moyen des dispositifs connus d'agitation.

Lors d'une telle acylation au moins partielle des coproduits peuvent apparaître dans la phase liquide réactionnelle, qui sont un alcool ou un mélange d'alcools, un acide ou un mélange d'acides, éventuellement à éliminer au fur et à mesure de leur production.

### DOMAINES D'UTILISATION DES POLYESTERS:

Les polyesters des composés polyhydroxylés appartenant au groupe sélectionné précité, au moins partiellement acylés peuvent être mis en oeuvre dans de nombreuses applications grâce aux qualités intrinsèques manifestées par les polyesters issus de ladite acylation.

Parmi les qualités intrinsèques les plus importantes, peuvent être mentionnées la liposolubilité intrinsèque la multifonctionnalité desdits composés polyhydroxylés au moins partiellement ou totalement acylés, leur absence de toxicité et d'écotoxicité, leur biodégradabilité, leur stabilité thermique et leur résistance à l'oxydation, leur faible volatilité, leur résistance au feu, leurs propriétés épaississantes et rhéologiques, leur pouvoir lubrifiant (anti-usure, anti-frottement,additif EP,Extrême Pression), leur solubilité à « façon » allant de l'hydrosolubilité à la liposolubilité avec des propriétés surfactantes dans les deux milieux et d'autres encore.

Dès lors, les applications possibles dans lesquelles peuvent intervenir les polyesters issus des composés polyhydroxylés du groupe sélectionné précité par acylation au moins partielle, selon l'invention sont diverses et multiples.

Parmi les applications possibles, peuvent être citées à titre illustratif, celles relatives aux domaines techniques tels que :
- les lubrifiants moteurs et industriels, les graisses....
- les fluides hydrauliques,
- les lubrifiants de déformation et du travail des métaux,
- les produits de démoulage et de poteyage,
- l'exploration pétrolière,les mines, les tunneliers,
- la cosmétique,
- la détergence,
- les encres, les revêtements textiles et papiers,
- l'alimentation,
la protection du bois
- les intermédiaires de synthèse
- et bien d'autres encore...

Les exemples ci-après illustrent l'objet de l'invention, pour mieux la comprendre mais sans en limiter la portée.

### EXEMPLES

Dans tous les exemples qui suivent, l'acylation au moins partielle des composés polyhydroxylés issus du groupe sélectionné précité, s'effectue dans la même installation expérimentale.

Pour ce faire, un réacteur de 250 millilitres est mis en oeuvre, ce réacteur étant muni d'un dispositif d'agitation tournant à 300 tours/min, d'un système Dean-Stark monté en série avec un moyen de réglage de la pression interne (pompe à vide), d'un moyen de création d'une atmosphère contrôlée par balayage d'azote et d'un moyen de chauffage, tous ces moyens étant contrôlés par des systèmes de régulation.

Dans l'ensemble des exemples suivants, on entend par « oligomères de carbonate de glycérol » un milieu réactionnel contenant environ :
- 20 à 25% d'oligomères contenant une ou plusieurs fonctions de carbonate linéaire appartenant aux structures de polycarbonates de glycérol, et aux copolymères [(α-hydroxyméthyl) oxyéthylène/(α-hydroxyméthyl) éthylène carbonate.
- 35 à 40% d'oligomères ne contenant pas de fonctions carbonatées mais qui sont des polyglycérols spécifiques,
- 30% de carbonate de glycérol n'ayant pas réagis lors de la synthèse des oligomères,
- 10% de glycérol

Le taux d'hydroxyde de ce milieu est de 784 mg KOH/g.

### Exemple 1 :

Cet exemple concerne l'acylation partielle d'un polycarbonate de glycérol par un anhydride lipophile qui est l'anhydride maléique.

Le milieu réactionnel est formé de :
- 25,90 g d'oligomères de carbonate de glycérol 45,55 g d'anhydride maléique,
- le catalyseur de type acide se forme in situ dès le début de la réaction d'acylation. - la présence d'un catalyseur ajouté n'est pas nécessaire

On introduit d'abord dans le réacteur le polycarbonate de glycérol qui est porté à la température de 70°C, puis on ajoute l'anhydride maléique préalablement chauffé pour qu'il soit au moins partiellement fondu en créant un mélange biphasique.

Le mélange ainsi réalisé est porté à 80°C sous une forte agitation et à une pression de 10⁵ Pascal jusqu'à la fusion totale de l'anhydride maléique.

Le mélange est alors porté à 130°C sous une agitation soutenue et sous une pression de 2. 10² Pascal pendant 5h30.

A l'issue de la réaction, le mélange réactionnel est composé de deux phases.

La phase supérieure du milieu réactionnel analysée en spectroscopie infra-rouge révèle qu'elle contient une proportion importante de chaînes grasses, que l' on ne retrouve pas dans la phase inférieure du milieu réactionnel. La présence dans les spectres FTIR de la phase supérieure du milieu réactionnel d'une bande à la fréquence 1743 cm⁻¹, attribuable aux fonctions ester, d'une bande de fréquence 1715 cm⁻¹, attribuable à l'acide carboxylique formé lors de la réaction de l'anhydride d'acide, et d'une bande de fréquence 1801 cm⁻¹, attribuable à l'anhydride d'acide qui n'a pas réagi démontre que la réaction d'estérification du polycarbonate de glycérol par l'anhydride maléique a bien eu lieu.

L'acylation partielle des oligomères de carbonate de glycérol par une chaîne en C₄ a permis à ces composés d'acquérir un caractère fortement hydrophobe qu'ils n'avaient pas initialement.

### Exemple 2 :

Cet exemple concerne l'acylation partielle d'un polycarbonate de glycérol par un acide lipophile qui est l'acide oléique.

Le milieu réactionnel est formé de :
- 25,18 g d'oligomères de carbonate de glycérol ayant 0,352 mol de fonction -OH
- 99,46 g d'acide oléique représentant 0,353 mol de fonction acyle.
- 0,25 g de catalyseur : acide paratoluène sulfonique.
   Le milieu réactionnel ainsi réalisé est porté à une température de consigne de 142°C sous une forte agitation et à une pression de 2,5.10⁵ Pascal pendant 8h.

Le déroulement de la réaction est suivi par des prélèvements réguliers d'échantillons dans la phase supérieure du milieu réactionnel dont on mesure la viscosité cinématique, l'indice d'hydroxyde, et l'indice d'acide. On constate une augmentation régulière au cours de la réaction de la viscosité cinématique des prélèvements, une diminution de l'indice d'acide, et une diminution de l'indice d'hydroxyde.

Au terme de la réaction, la viscosité cinématique mesurée à 40°C est alors passée de 21,8 à 62,6 cSt, et l'indice d'acide diminue, passant de 200 à 83,5. Le rendement d'estérification peut être calculé et apparaît être de 58%.

On pèse et on analyse alors la matière récupérée dans le Dean Stark et dans le piège à vapeurs. Cette matière récupérée apparaît être composée très majoritairement (99%) d'eau issue essentiellement de la réaction d'estérification avec des traces de glycérol : ainsi on a recueilli 4,16 g d'eau soit 0,228 mol, ce qui donnerait un rendement d'estérification de 64% comparable à celui calculé à partir des indices d'acide.

Ainsi, une acylation partielle des fonctions OH des chaînes de polycarbonate de glycérol, par l'acide oléique a bien été obtenue.

### Exemple 3 :

Cet exemple concerne l'acylation partielle d'un polycarbonate de glycérol par transestérification au moyen d'un ester méthylique de tournesol oléique.

Le milieu réactionnel est formé de :
- 24,94 g d'oligomères de carbonate de glycérol ayant 0,34 g mol de fonction -OH
- 107,79 g d'ester méthylique de tournesol représentant 0,364 mol de fonction acyle.
- 1,41 g de catalyseur : méthylate de sodium.

Ce milieu réactionnel réalisé dans le réacteur est porté à une température de consigne de 142°C sous une forte agitation de 300 tours/min et à une pression de 2,5.10⁵ Pascal pendant 8h.

Le déroulement de la réaction est suivi par des prélèvements réguliers d'échantillons dont on mesure la viscosité cinématique, et l'indice d'hydroxyde. Les mesures des indices d'acide donnent des valeurs qui restent quasiment nulles pendant tout le déroulement de la réaction.

On constate une augmentation régulière au cours de la réaction de la viscosité cinématique des prélèvements, tandis que l'indice d'hydroxyde suit une courbe en cloche. Cette dernière s'explique par le passage progressif dans la phase lipophile de chaînes oligomères de carbonate de glycérol faiblement acylées, puis de l'augmentation progressif de leur taux d'acylation.

La réaction est arrêtée après 8h à la température de consigne : le milieu réactionnel est presque devenu monophasique. La viscosité cinématique mesurée à 40°C est alors passée de 4,5 à 45,2 cSt et le taux d'hydroxyde atteint 34 mgKOH/g.

On pèse et on analyse alors la matière récupérée dans le Dean Stark et dans le piège à vapeurs et on trouve que cette matière est majoritairement de méthanol (91%) avec un peu d'eau (7%), et des traces de glycérol et de carbonate de glycérol. Le méthanol recueilli est issu de la réaction de transestérification de l'ester méthylique par les oligomères de carbonate de glycérol. On a recueilli 10,2 g de matière, soit 0,291 mol de méthanol, ce qui donne un rendement d'estérification de 83% des fonctions OH disponibles.

Il est ainsi prouvé qu'une transestérification partielle de l'ester méthylique de tournesol par les fonctions -OH des chaînes oligomères de carbonate de glycérol a bien été obtenue.

### Exemple 4 :

Cet exemple concerne l'acylation partielle d'un polycarbonate de glycérol par une réaction d'interestérification au moyen d'une huile de tournesol oléique lipophile.

Le milieu réactionnel est formé de :
- 25,06 g d'oligomères de carbonate de glycérol ayant 0,351 g mol de fonction -OH
- 103,5 g d'huile de tournesol oléique représentant 0,351 mol de fonction acyle,
- 1,26 g de catalyseur : méthylate de sodium.

Ce milieu réactionnel est porté à une température de 142°C, sous forte agitation de 300 tours/min et est soumis à la pression réduite de 2,5.10² bars.

La réaction est arrêtée après 8h à la température de consigne. La viscosité cinématique mesurée à 40°C est alors passée de 41,4 à 158,7 cSt.

On analyse la faible quantité de matière récupérée dans le Dean Stark on trouve que cette matière est composée majoritairement de glycérol et de carbonate de glycérol.

### Exemple 5 :

Cet exemple concerne l'acylation partielle d'un polycarbonate de glycérol par une réaction d'estérification consécutive au moyen d'un mélange de deux acides lipophiles.

Le milieu réactionnel est formé de :
- 40,96 g d'oligomères de carbonate de glycérol ayant 0,573 g mol de fonction -OH
- 98,07 g d'un mélange composé à 50% en poids d'acide oléique et 50% en poids d'acide tridécanedioique représentant 0,576 mol de fonction acyle,
- 0,41 g de catalyseur : acide paratoluène sulfonique.

Le milieu réactionnel est porté à la température de consigne de 142°C, sous forte agitation et est soumis à la pression réduite de 2,5.10² Pascal.

La réaction est arrêtée après 8h à la température de consigne : le milieu réactionnel est devenu totalement monophasique. Après refroidissement, le milieu réactionnel a la consistance d'une graisse.

L'indice d'acide diminue, passant de 328 à 121. Cette diminution de l'indice donne un rendement d'estérification de 50%, en tenant compte du fait que l'on n'a plus qu'une seule phase.

On pèse et on analyse alors la matière récupérée dans le Dean Stark et dans le piège à vapeurs et on trouve que cette matière est très majoritairement (97%) d'eau, avec des traces de glycérol. Cette eau est issue essentiellement de la réaction d'estérification. On a recueilli 5,64 g de matière, soit 0,304 mol d'eau, ce qui donnerait un rendement d'estérification de 53% des fonctions OH disponibles, résultat comparable à celui calculé à partir des indices d'acide.

Ainsi une estérification partielle des fonctions OH des chaînes oligomères de carbonate de glycérol, par l'acide oléique a bien été obtenue.

### Exemple 6 :

Cet exemple concerne l'acylation totale de polycarbonate de glycérol par de l'anhydride acétique.

Le milieu réactionnel est formé de :
- 22,5 g d'oligomères de carbonate de glycérol ayant 0,315mol de fonction -OH
- 85 g d'anhydride acétique représentant 0,315 mol de fonction acyle,
- un catalyseur ajouté n'est pas nécessaire, car le catalyseur réactionnel se forme in situ dès l'amorce de la réaction d'acylation.

Ce milieu réactionnel réalisé dans le réacteur est porté à une température de consigne de 50°C sous forte agitation de 300 tours/min et à une pression de 2,5.10² Pascal pendant 2h30.

A l'issue de la réaction, la pression dans le réacteur est maintenue à 2,5.10² Pascal et la température est également maintenue à 50°C jusqu'à la distillation de l'acide acétique formé lors de l'acylation.

La mesure du taux d'hydroxyle du milieu réactionnel final acylé, déduction faite de l'influence de l'acide acétique résiduel, donne un résultat nul prouvant que l'acylation des fonctions OH du milieu oligomérisé est complète.

Un spectre IR du milieu réactionnel acylé montre l'apparition d'une bande à la fréquence 1743 cm⁻¹, attribuable aux fonctions ester, et d'une bande de fréquence 1715 cm⁻¹, attribuable à l'acide carboxylique formé lors de la réaction de l'anhydride acétique.
10 g du milieu réactionnel estérifié sont mélangés avec 50 ml d'eau et 50 ml d'hexane dans une ampoule à décanter, et soumis à une agitation vigoureuse. La phase aqueuse et la phase organiques sont récupérées séparément et évaporées à l'évaporateur rotatif. Les résultats des évaporations donnent chacun une fraction respectivement hydrophile et lipophile. La masse de la fraction lipophile récupérée est très inférieure à celle de la fraction hydrophile.

L'analyse en IR des fractions récupérées montre que les deux fractions sont composées d'esters, et que la fraction hydrophile contient des composés à fonctions carbonate cyclique, alors que la fraction lipophile n'en contient pas.

L'acylation par l'estérification des polymères de carbonate de glycérol par une chaîne en C₂ a permis à ces composés d'acquérir un caractère hydrophobe.

### Exemple 7 :

Cet exemple concerne l'acylation complète de polycarbonate de glycérol au moyen de l'anhydride caproïque.

Le milieu réactionnel est formé de :
- 20,0 g d'oligomères de carbonate de glycérol ayant 0,28 mol de fonction -OH
- 132 g d'anhydride caproïque représentant 0,28 mol de fonction acyle,
- un catalyseur ajouté n'est pas nécessaire, car le catalyseur réactionnel se forme in situ dès l'amorce de la réaction d'acylation.
   La réaction est menée pendant 4h30, sous agitation, à la température de 110°C. La pression dans le réacteur lors de la réaction est réduite à 2.10² Pascal, afin de déplacer la réaction dans le sens de la formation de l'ester, par distillation de l'acide caproïque formé lors de l'acylation.
   Un spectre IR du milieu réactionnel estérifié montre l'apparition d'une bande à la fréquence 1743 cm⁻¹, attribuable aux fonctions ester, d'une bande de fréquence 1715 cm⁻¹, attribuable à l'acide carboxylique formé suite à la réaction de l'anhydride d'acide, et d'une bande de fréquence 1810 cm⁻¹, attribuable à l'anhydride d'acide qui n'a pas réagi.
   Par la suite, 10 g du milieu réactionnel acylé sont mélangés avec 50 ml d'eau et 50 ml d'hexane dans une ampoule à décanter, et soumis à une agitation vigoureuse. La phase aqueuse et la phase organiques sont récupérées séparément et évaporées à l'évaporateur rotatif. Les résultats des évaporations donnent chacun une fraction respectivement hydrophile et lipophile. La masse de la fraction lipophile récupérée est très supérieure à celle de la fraction hydrophile.
   L'analyse en Infra-Rouge des fractions récupérées montre que les deux fractions sont composées d'esters.
   L'estérification des polymères de carbonate de glycérol par une chaîne en C₆ a permis à ces composés d'acquérir un caractère fortement hydrophobe qu'ils n'avaient pas antérieurement.

### Exemple 8 :

Cet exemple concerne l'acylation partielle à l'échelle semi-industrielle de polycarbonate de glycérol (PCG) au moyen d'une huile de tournesol à 90% d'acide oléique (production pilote P1)
ou d'oléate de triméthyl ol propane (production pilote P2).
Le milieu réactionnel (P1) est formé
- d'oligomères de carbonate de glycérol (PCG)
- d'huile de tournesol oléique
- et de catalyseur (méthylate de sodium).

Chaque composé du milieu réactionnel intervenant selon des quantités proportionnelles à celles de l'exemple 4.

Le milieu réactionnel (P2) est formé
- d'oligomères de carbonate de glycérol (PCG)
- d'oléate de triméthyl ol propane
- et de catalyseur (méthylate de sodium).

Chaque composé du milieu réactionnel intervenant selon des quantités proportionnelles à celles de l'exemple 4.

Les conditions opératoires sont inspirées de l'exemple 4 :
- le réacteur mis en oeuvre a une contenance de 50 litres et est muni d'une double enveloppe permettant la régulation homogène de la température du milieu réactionnel à 142°C ± 1°C
- la pression réduite à laquelle le milieu réactionnel est soumis est de 3.10² Pascal grâce à une pompe à anneau liquide.
- Le milieu réactionnel est soumis à une double agitation provoquée par une ancre/racleur tournant à 40 tours par minute et un disperseur qui est un disque dentelé tournant à 1500 tours par minute.

Cette double et forte agitation permet de bien disperser les gouttelettes du mélange réactionnel initial hydrophile dans un milieu lipophile (l'huile de tournesol) et avec des catalyseurs solides. Ceci explique une cinétique plus rapide, un rendement d'estérification plus élevé et des propriétés de lipophilie (solubilité, pouvoir épaississant etc...) plus intéressantes :
- L'avancement de la réaction est évalué de manière indirecte par la solubilisation du PCG dans l'huile de tournesol et par la « stabilisation » de la viscosité du milieu réactionnel.
- Cette stabilisation est obtenue au bout de 2 à 6 heures.

Au terme de la réaction, c'est-à-dire dès lors qu'a été constaté la stabilisation de la viscosité du milieu réactionnel, le milieu réactionnel final a été observé, la viscosité mesurée à 40°C ainsi que l'indice d'hydroxyle, à comparer à l'indice d'hydroxyle du glycérol et du polycarbonate de glycérol mis en oeuvre dans l'acylation.

Les observations et résultats sont regroupés dans le tableau (1) ci-après :

| **TABLEAU 1** | Essai pilote P1 | Essai pilote P2 | | |
|---|---|---|---|---|
| Aspect | Huile de tournesol à 90% en acide oléïque | Oléate de triméthyl ol propane | Glycérol | Polycarbonate de glycérol |
| Milieu réactionnel final | Homogène 1 phase | Homogène 1 phase | | |
| Viscosité à 40°C en cSt* | 310 | 2500 | | |
| Indice d'hydroxyle en mg KOH/g | 160 | 120 | 650 | 785 |

| | | | | |
|---|---|---|---|---|
| * viscosité à 40°C de l'huile de tournesol haute teneur en acide oléique est de 40 cSt | | | | |

L'évolution des viscosités et des indices d'hydroxyle prouvent bien l'acylation au moins partielle selon l'invention du polycarbonate de glycérol par un acide organique.

### Exemple 9 :

Application des esters selon l'invention à la lubrification : ces esters étant en mélange dans de l'huile de tournesol à haute teneur en acide oléique exempts de tout autre additif de performance

### a) Propriétés épaississantes :

Les esters selon l'invention provenant de l'exemple n°8 (P1) sont totalement solubles dans les bases lubrifiantes pétrolières naturelles ou synthétiques. Ils sont testés en dilution dans l'huile de tournesol à haute teneur oléique.

Dans le domaine des lubrifiants industriels, la viscosité est un paramètre fondamental et conditionne l'épaisseur du film lubrifiant. Pour les utilisateurs, une gamme de viscosité est proposée, chaque viscosité correspondant à une application précise : une classification ISO basée sur la viscosité (ISO 3448) des lubrifiants industriels existe et permet de différencier ces lubrifiants les uns des autres. Par exemple, l'indication « ISO 46 » veut dire que le lubrifiant ainsi repéré possède une viscosité cinématique de 46 cSt avec un écart de +/-10%, mesuré à 40°C.

Ainsi pour avoir une classification de grade IS046 ou ISO68, on mélange de l'huile de tournesol à haute teneur en acide oléique avec le milieu réactionnel selon la quantité nécessaire dudit milieu réactionnel pour obtenir une viscosité de 46 cSt du mélange à une température de 40°C pour le grade ISO46 et pour obtenir une viscosité de 68 cSt du mélange à la même température pour le grade IS068.

Enfin l'ester selon l'invention est soumis tel quel à une mesure de viscosité à 100°C et à 40°C.

Toutes les données expérimentales sont réunies dans le tableau 2

### b) Propriétés anti-usure et extrême pression :

Ces propriétés ont été mesurées par une machine dénommée « machine ou essai 4 billes » d'après respectivement les normes ASTM D4172 et D2783. On détermine après test en présence des lubrifiants la trace d'usure d'une bille (en mm) sous charge constante (40 kg), tournant sur 3 autres billes ou bien la charge de soudure des billes (charge croissante). Les essais suivants ont été conduits avec des billes aciers 100C6 en comparaison avec de l'huile de tournesol à haute teneur oléique.

### c) Propriétés rhéologiques à basse température :

On a déterminé le point d'écoulement des polyesters de polycarbonate de glycérol (P1) de l'exemple 8 selon la norme ASTMD97.

Tous les résultats expérimentaux ont été rassemblés dans le tableau 2 ci-après et il apparaît que les résultats concernant les polyesters de polycarbonate de glycérol sont meilleurs que ceux concernant le témoin, à savoir : l'huile de tournesol.

Toutes les données expérimentales sont réunies dans le tableau 2.

**Tableau 2 :**

| | ISO46 | ISO68 | Huile de tournesol à haute teneur oléique |
|---|---|---|---|
| Viscosité à 40°C (cst) | 44 | 62 | 39.7 |
| Viscosité à 100°C (cSt) | 8.9 | 11 | 8.7 |
| Indice de viscosité (VI) | 188 | 172 | 207 |
| Usure (mm) | 0.5-0.6 | 0.5-0.6 | 0.6-0.7 |
| Extrême-Pression (kg) | 160-170 | 160-170 | 120-130 |
| Point d'écoulement (°C) | - 19 | - 21 | - 15 |

Il est constaté que tous les essais conduits à partir de l'ester selon l'invention apportent des résultats au moins égaux à ceux procurés par le témoin mais quasiment toujours supérieurs à ceux du témoin.

### Exemple 10 :

Résistance à l'inflammation (esters issus de l'exemple 8 - P1)
a) Essai au jet pulvérisé « dégagement de chaleur d'une flamme stabilisée » (« Commission Européenne » Rapport 7^{e} édition de Luxembourg : Exigences et essais applicables aux liquides difficilement inflammables utilisés pour les transmissions mécaniques et les régulations (hydrostatiques et hydrocinétiques).
   Le principe est le suivant : Dans une chambre de combustion dans laquelle circule de l'air, un jet pulvérisé composé de liquide (produit à tester) et d'air sous pression est soumis à une flamme définie d'un brûleur à gaz. On mesure les températures des fumées et des gaz en sortie et de l'air à l'entrée avec et sans le jet et on détermine un indice d'inflammabilité (RI) et en même temps, on mesure la longueur de la flamme (RL), la densité optique des fumées etc... suivant principalement les 2 premiers paramètres.
b) une classification de dangerosité à l'inflammation est donnée dans le tableau suivant : plus le RI ou le RL est élevé, plus le fluide hydraulique est difficilement inflammable et sa longueur de flamme faible.

**Tableau 3 : INFLAMMABILITE (classement principal)**

| Classe | A | B | C | D | E | F | G | H |
|---|---|---|---|---|---|---|---|---|
| Indice d'inflammabilité RI | > 100 | 100-80 | 79-65 | 64-50 | 49-36- | 35-25 | 24-14 | < 14 |
| (longueur de flamme) RL | > 100 | 100-56 | 55-51 | 50-11 | 10-7 | <7 | | |

L'ester suivant l'invention a été testé en mélange avec de l'huile de tournesol à haute teneur oléique selon les grades ISO46 et ISO68, par comparaison avec cette même huile de tournesol à haute teneur oléique.

Toutes les données expérimentales sont réunies dans le tableau 4.

**Tableau 4 :**

| | RI et classe | RL et classe |
|---|---|---|
| Huile de tournesol à haute teneur oléique. | 10 classe H | 7 classe E |
| ISO46 avec esters | 11 classe H | 8 classe E |
| ISO68 avec esters | 14 classe G | 8 classe E |

Les résultats issus de ce tableau montrent que l'augmentation de la quantité de l'ester dans l'huile de tournesol à haute teneur oléique (en passant de l'ISO46 à l'ISO68) améliore l'inflammabilité du mélange soumis au test de résistance à l'inflammation, non seulement par la mise en oeuvre de polyester selon l'invention, mais aussi par l'augmentation de sa concentration dans le milieu, en passant de l'ISO46 à l'IS068.
b) La chaleur de combustion (kJ/g) a également été mesurée selon la norme ASTM D240. La chaleur de combustion caractérise l'énergie calorifique dégagée par un composé en brûlant. Plus cette valeur est élevée, plus le composé est un bon carburant et plus le « feu » s'entretient par ce facteur qui est la température, car chaque composé a sa température de flamme. Ces mesures de chaleur de combustion, ont été réalisées non seulement sur l'ester selon l'invention seul ou en mélange avec de l'huile de tournesol à haute teneur oléique, mais aussi sur des produits types.

Tous les résultats de chaleur de combustion sont donnés dans le tableau 5.

**Tableau 5 :**

| Echantillons | Chaleur de combustion (kJ/g) |
|---|---|
| Huiles minérales | 44 |
| Heptane | 40.2 |
| Esters végétaux | 39.2 |
| Esters phosphates | 34.8 |
| Huile de tournesol à haute teneur oléique | 39.6 |
| Ester (exemple 8 - P1) | 36.8 |
| Composition selon l'invention de l'exemple 8 - P1 en mélange dans de l'huile de tournesol à haute teneur oléique selon le grade IS046 | 39.2 |
| Composition selon l'invention de l'exemple 8 - P1 en mélange dans de l'huile de tournesol à haute teneur oléique selon le grade IS068 | 38 |

### Exemple 11 : Séparation des composants d'un mélange par distillation « moléculaire » ou à « court chemin » :

Le polyester de polycarbonate de glycérol (EPCG) de l'exemple 8 (P1) est en fait un milieu réactionnel brut issu de la réaction d'inter estérification entre du polycarbonate de glycérol (PCG) et de l'huile de tournesol à haute teneur oléique (HOSO) dans un ratio 25/75.

Comme la composition selon l'invention issue de l'exemple 8 - P1 est formée d'esters de polycarbonate de glycérol, de polycarbonate de glycérol, d'huile de tournesol à haute teneur oléique et d'autres composés résultant de la réaction, une distillation moléculaire ou à « court chemin », a été pratiquée, cette méthode consiste à réaliser une séparation des constituants présents dans la composition selon l'invention, par leur point d'ébullition propre, la distillation moléculaire se distinguant de la distillation classique par le fait que la distance entre l'organe chauffant qui porte à ébullition chaque constituant et l'organe de refroidissement qui condense et recueille chaque constituant est égal au libre parcours moyen de chaque constituant à l'état gazeux.
- L'appareillage de distillation moléculaire utilisé est un modèle du type laboratoire, référencé KDT6 de débit théorique de 2 Kg/h tel que commercialisé par la société U.I.C (GMBH).
- L'installation de distillation a été mise sous un vide (pression réduite) de 10² Pascal puis la température, pour provoquer la distillation, a été portée de 110°C à 200°C par palier de 10C : un début de distillation est apparu à partir de 200°C. Les conditions et résultats quantitatifs de cette distillation sont réunis dans le tableau 6.

**Tableau 6 :**

| Température °C | Pression mb | Distillat (g) | Résidu (g) | Débit (g/h) |
|---|---|---|---|---|
| 200 | 5.10² | 20 | 172 | 600 |
| 220 | 5.10² | 35.5 | 123.2 | 476 |
| 250 | 5.10² | 74.5 | 115.24 | 517 |

Les fractions par niveau de température de distillats et de résidu issus du tableau 6 ont été soumises à caractérisation par la mesure de leur viscosité à 40°C, et par la mesure de leur indice d'hydroxyle et ce, par comparaison avec le polycarbonate de glycérol (PCG) mis en oeuvre dans l'estérification de l'exemple 8-P1 et du glycérol.

Tous les résultats de caractérisation ont été réunis dans le tableau 7.

**Tableau 7 :**

| Température °C | Viscosité cSt à 40°C Distillats | Indice hydroxyle Distillats (mg KOH/g) | Indice hydroxyle Résidus (mg KOH/g) |
|---|---|---|---|
| Essai 110-200 | 310 | 405 | 129 |
| 200 | 320 | 450 | 131 |
| 220 | 340 | 425 | 152 |
| 250 | 285 | 415 | 156 |
| PCG | | 784 | |
| Glycérol | | 651 | |

Ces résultats montrent :
- qu'avec ces valeurs d'indices d'hydroxyle et de viscosité voisines, les distillats sont des esters partiels de PCG avec des masses moléculaires comparables (même viscosité) mais dont les points d'ébullition se différencient par des structures chimiques différentes.
- Que les résidus sont fondamentalement différents des distillats, plus proches d'esters totaux ayant de faibles indices d'hydroxyle, et de viscosité de plus en plus importante suivant la température de distillation.
- Que chaque résidu est potentiellement chimiquement et physiquement différents puisque le pouvoir épaississant de chacun d'entre eux, dès lors qu'il est mis en oeuvre à raison de 5% en poids, dans les bases du tableau 8 suivant, est différent.

**Tableau 8 :**

| Bases (Mélange = 5% résidu/base) | Résidu 200°C | | | Résidu 250°C | |
|---|---|---|---|---|---|
| | Viscosité de la base en cSt | Viscosité du mélange en cSt | Augmentation de l'épaississement du mélange en % | Viscosité mélange cSt | Augmentation de l'épaississement du mélange en % |
| Base minérale 150SN | 30 | 34 | 13 | 43 | 43 |
| Polyalphaoléfine PAO10 | 63 | 69 | 9.5 | 106 | 68 |
| Naphthénique T9 | 9 | 11 | 22 | 13 | 44 |
| Oléate de triméthyl ol propane | 46 | 55 | 19.6 | 70 | 52 |
| Huile de tournesol HO | 40 | 60 | 50 | | |
| Oléate de méthyle | 5 | 6.2 | 24 | 6 | 20 |
| Oléate d'octyle | 9 | 11 | 22 | 11 | 22 |
| Oléate d'isopropyle | 5 | 10 | 100 | 6 | 20 |
| Mono oléate de sorbitan | 296 | 298 | 0 | 297 | 0 |
| Oléate de penta érythritol | 67 | 78 | 16 | 76 | 13 |
| Oléate de néo pentyl glycol | 29 | 35 | 21 | 44 | 52 |

## Revendications

1. Compositions de polyesters au moins partiellement acylés de composés polyhydroxylés en mélange constitué de polycarbonates de glycérol, de polyglycérols spécifiques, de copolymères [(α-hydroxyméthyl) oxyéthylène/(α-hydroxyméthyl) éthylène carbonate], de copolymères [(α-hydroxyalkyl) oxyéthylène/(α-hydroxyalkyl) éthylène carbonate], de copolymères [(α-alkyl) oxyéthylène/(α-hydroxyalkyl) oxyéthylène], **caractérisées en ce que** lesdits polyesters au moins partiellement acylés des composés polyhydroxylés répondent aux formules générales suivantes dans lesquelles k est le taux d'acylation compris entre 0,01 et 1, bornes incluses :
a) pour les polyesters des polycarbonates de glycérol au moins partiellement acylés : 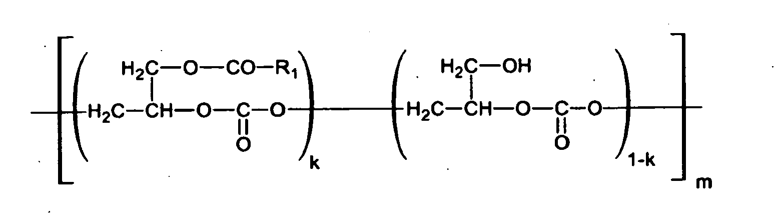 dans laquelle « m » est au moins égal à 2, qui peut prendre une valeur comprise entre 2 et 100, bornes incluses.
b) pour les polyesters des polyglycérols spécifiques au moins partiellement acylés :
b1) 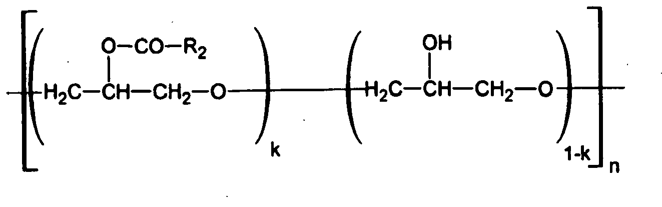 et/ou b2) 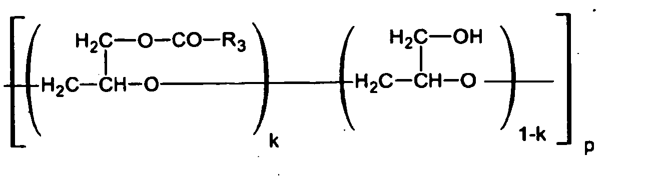 dans laquelle « n » et « p » sont chacun au moins égal à 2 et prennent une valeur comprise entre 2 et 150, bornes incluses.
c) pour les polyesters des copolymères [(α-hydroxyméthyl) oxyéthylène (α-hydroxyméthyl) éthylène carbonate)] au moins partiellement acylés:
c1) 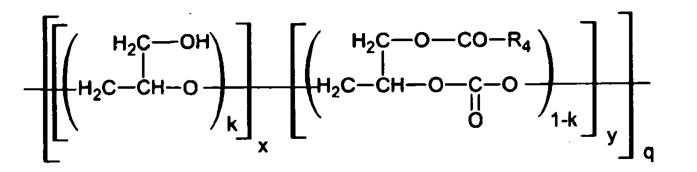 et/ou c2) 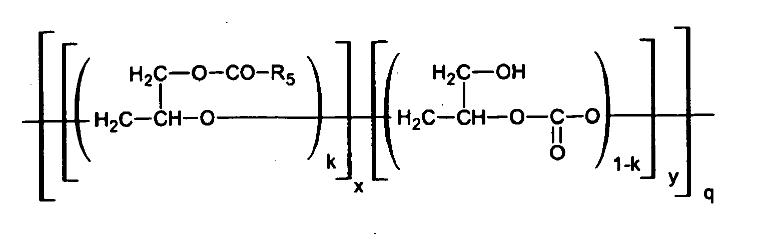 dans lesquelles « x » est au moins égal à 2 et prend une valeur comprise entre 2 et 100, bornes incluses, « y » est au moins égal à 2 et prend une valeur comprise entre 2 et 100, bornes incluses, et « q » est au moins égal à 2 et prend une valeur comprise entre 2 et 100, bornes incluses.
d) pour les polyesters des copolymères [(α-hydroxyalkyl) oxyéthylène/(α-hydroxyalkyl) éthylène carbonate] dans lesquels l'un au moins des α-alkyl 1 ou α-alkyl 2 est une chaîne hydrocarbonée hydroxylée en C₁ à C₄ au moins partiellement acylés, alors que l'autre α-alkyl est H ou une chaîne hydrocarbonée en C₁ à C₄ :
d1) 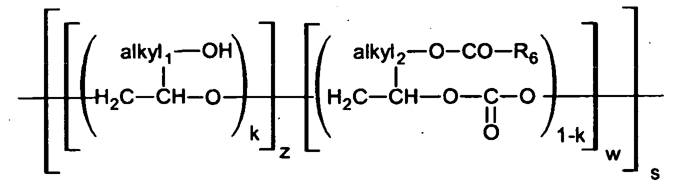 et/ou d2) 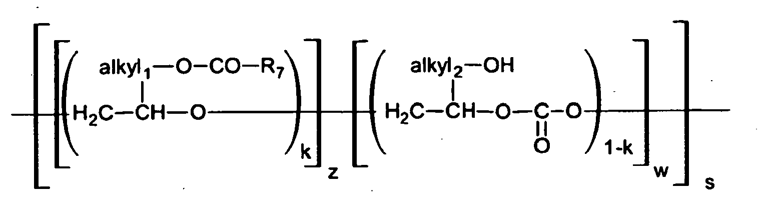 dans laquelle « z » est au moins égal à 2 et prend une valeur comprise entre 2 et 100, « w » est au moins égal à 2 et prend une valeur comprise entre 2 et 100 et « s » est au moins égal à 2 et prend une valeur comprise entre 2 et 100,
e) pour les polyesters des copolymères [(α-alkyl) oxyéthylène/(α-hydroxyalkyl) oxyéthylène] au moins partiellement acylés représentés par la formule générale :
e1) 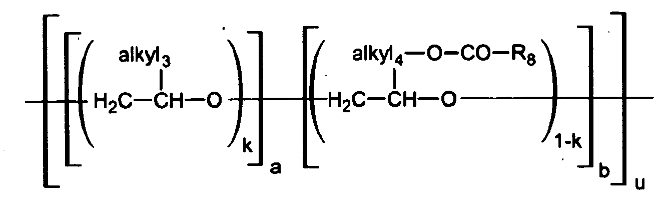 et
e2) 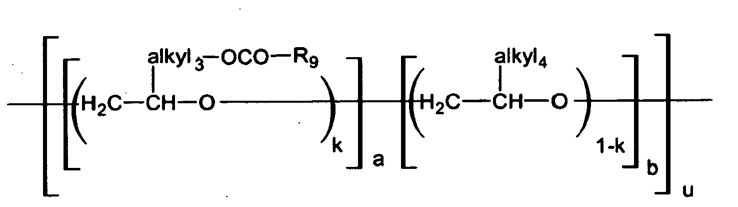
dans laquelle « a » est au moins égal à 2 et prend une valeur comprise entre 2 et 100, « b » est au moins égal à 2 et prend une valeur comprise entre 2 et 100 et « u » est au moins égal à 2 et prend une valeur comprise entre 2 et 100, tandis que l'alkyl 3 et l'alkyl 4 sont H ou une chaîne hydrocarbonée en C₁ à C₄,
R₁, R₂, R₃, R₄, R₅, R₆, R₇ R₈ et R₉ étant des chaînes hydrocarbonées en C₁ à C₄₃, saturés ou insaturés, éventuellement fonctionnalisées par des fonctions hydroxyles et/ou époxy et pouvant être identiques ou différents.

2. Compositions selon la revendication 1 **caractérisées en ce que** les chaînes hydrocarbonées R₁ à R₉ ont préférentiellement un nombre de carbones compris entre C₁ à C₄₃

3. Compositions selon l'une quelconque des revendications 1 et 2 **caractérisées en ce que** les polyesters procèdent de la réaction d'acylation simple, partielle ou totale, entre l'un au moins des composés polyhydroxylés du mélange et un composé d'acylation choisi dans le groupe constitué par les monoacides carboxyliques R-COOH et les chlorures d'acides carboxyliques R-COCl, dans lesquels R est une chaîne hydrocarbonée en C₁ à C₄₃, saturées ou insaturées, éventuellement fonctionnalisées par des fonctions hydroxyles et/ou époxy.

4. Compositions selon l'une quelconque des revendications 1 et 2 **caractérisées en ce que** les polyesters procèdent de la réaction d'acylation simple-mixte, partielle ou totale, entre l'un au moins des composés polyhydroxylés du mélange et d'au moins deux composés d'acylation choisis dans le groupe constitué par des acides monocarboxyliques R-COOH différents les uns des autres et les chlorures d'acides carboxyliques R-CoCl, dans lesquels R est une chaîne hydrocarbonée en C₁ à C₄₃, saturées ou insaturées, éventuellement fonctionnalisées par des fonctions hydroxyles et/ou époxy.

5. Compositions selon l'une quelconque des revendications 1 et 2 **caractérisées en ce que** les polyesters procèdent de la réaction d'acylation complexe-simple, partielle ou totale, entre l'un au moins des composés polyhydroxylés du mélange, avec un seul composé d'acylation choisi dans le groupe constitué par les diacides carboxyliques aliphatiques HO-CO-R-CO-OH ou aromatiques et les anhydrides d'acides carboxyliques R-CO-O-CO-R' comportant des chaînes hydrocarbonées R et R' en C₁ à C₄₃, saturées ou insaturées, éventuellement fonctionnalisées par des fonctions hydroxyles et/ou époxy.

6. Compositions selon la revendication 5 **caractérisées en ce que** les polyesters procèdent de la réaction d'acylation complexe-simple, partielle ou totale du type intermoléculaire, par pontage par le biais des fonctions acides et des fonctions hydroxyles entre au moins deux molécules de l'un au moins des composés polyhydroxylés du mélange et une molécule de l'un au moins des composés d'acylation.

7. Compositions selon la revendication 5 **caractérisées en ce que** les polyesters procèdent de la réaction d'acylation complexe-simple, partielle ou totale du type intramoléculaire, par pontage entre deux sites hydroxylés de la même molécule de polymères et/ou copolymères polyhydroxylés du mélange au moyen des deux fonctions acides du composé d'acylation.

8. Compositions selon l'une quelconque des revendications 1 et 2 **caractérisées en ce que** les polyesters procèdent de la réaction d'acylation complexe-mixte, partielle ou totale, entre au moins un composé polyhydroxylé du mélange et au moins deux composés d'acylation différents choisis dans le groupe constitué par des acides dicarboxyliques HO-CO-R-COOH différents et les anhydrides d'acides carboxyliques R-CO-O-CO-R' différents comportant des chaînes hydrocarbonées R et R' en C₁ à C₄₃, saturées ou insaturées, éventuellement fonctionnalisées par des fonctions hydroxyles et/ou époxy.

9. Compositions selon la revendication 8 **caractérisées en ce que** les polyesters procèdent de la réaction d'acylation complexe-mixte, partielle ou totale du type intermoléculaire, par pontage au moyen de fonctions hydroxyles entre au moins deux molécules de l'un au moins des polymères et/ou copolymères polyhydroxylés du mélange, et au moins deux composés d'acylation différents appartenant au groupe des acides dicarboxyliques différents et des anhydrides d'acides carboxyliques différents par le biais des fonctions acides et des fonctions hydroxyles.

10. Compositions selon la revendication 8 **caractérisées en ce que** les polyesters procèdent de la réaction d'acylation complexe-mixte, partielle ou totale du type intramoléculaire, par une réaction de site à site entre les deux sites acides de l'un des composés d'acylation dicarboxylique et deux sites hydroxylés d'une même chaîne de l'un des polymères et/ou copolymères polyhydroxylés et entre les deux sites acides d'un autre des composés d'acylation dicarboxylique et deux sites hydroxylés d'une même chaîne ou d'une autre chaîne de l'un ou de plusieurs des polymères et/ou copolymères polyhydroxylés.

11. Compositions selon l'une quelconque des revendications 1 et 2 **caractérisées en ce que** les polyesters procèdent de la réaction d'acylation simple par transestérification, partielle ou totale, entre l'un au moins des composés polyhydroxylés du mélange et un composé d'acylation choisi dans le groupe constitué par des monoesters de formule R-CO-O-R' dans lesquels R et R' sont des chaînes hydrocarbonées R et R' en C₁ à C₄₃, saturées ou insaturées, éventuellement fonctionnalisées par des fonctions hydroxyles et/ou époxy.

12. Compositions selon la revendication 11 **caractérisées en ce que** les monoesters sont préférentiellement choisis dans le groupe constitué par les esters méthyliques d'huiles de coco, de palme, de colza, de tournesol et de ricin.

13. Compositions selon l'une quelconque des revendications 1 et 2 **caractérisées en ce que** les polyesters procèdent de la réaction d'acylation simple-mixte, partielle ou totale, de type par transestérification, entre l'un au moins des composés polyhydroxylés du mélange et d'au moins deux composés d'acylation qui sont des monoesters R-CO-O-R' et R"-CO-OR''' dans lesquels R, R' , R'' et R''' sont des chaînes hydrocarbonées R et R' en C₁ à C₄₃, saturées ou insaturées, éventuellement fonctionnalisées par des fonctions hydroxyles et/ou époxy, R, R', R'', et R"' pouvant être identiques sous la réserve que R ou R' est différent de R'' et R"' ou différents.

14. Compositions selon l'une quelconque des revendications 1 et 2 **caractérisées en ce que** les polyesters procèdent de la réaction d'acylation complexe-simple, partielle ou totale, de type par transestérification, entre l'un au moins des composés polyhydroxylés du mélange et d'au moins un seul composé d'acylation qui est au moins un diester de formule R'-CO-O-R-CO-O-R" ou un monoester d'un diacide carboxylique de formule R'-O-CO- R-CO-OH dans lesquels R, R' et R" sont des chaînes hydrocarbonées R et R' en C₁ à C₄₃, saturées ou insaturées, éventuellement fonctionnalisées par des fonctions hydroxyles et/ou époxy, R, R' et R" pouvant être identiques ou différents, avec au moins un composé polyhydroxylé du mélange.

15. Compositions selon l'une quelconque des revendications 1 à 14 **caractérisées en ce que** les chaînes hydrocarbonées R, R', R" et R"' sont préférentiellement des chaînes en C₁ à C₄₃, saturées ou insaturées, éventuellement fonctionnalisées par des fonctions hydroxyles et/ou époxy.

16. Procédé catalytique d'acylation au moins partielle de compositions comprenant en mélange des composés polyhydroxylés qui sont des polycarbonates de glycérol, des polyglycérols spécifiques, des copolymères [(α-hydroxyméthyl) oxyéthylène/(a-hydroxyméthyl) éthylène carbonate], des copolymères [(α-hydroxyalkyl) oxyéthylène/(α-alkyl) éthylène carbonate], des copolymères [(α-alkyl) oxyéthylène/(α-hydroxyalkyl) oxyéthylène], selon l'une au moins des revendications 1 à 15, **caractérisé en ce que** la réaction catalytique d'acylation au moins partielle s'effectue dans un milieu réactionnel hétérogène biphasique, de type liquide/liquide formé des composés polyhydroxylés à acyler et d'un composé d'acylation de formule Y-R-CO-X, dans lequel X peut être -OH (acide), Cl (chlorure) ou -O-R' (esters) et Y est H quand le composé acylé est monofonctionnel et est -COOH(acide)-CO-O-R" (esters) quand le composé acylé est au moins bi-fonctionnel, milieu réactionnel hétérogène biphasique :
(i) dans lequel le catalyseur est dispersé quand il ne se forme pas « in situ » dès l'amorce de la réaction d' acylation
(ii) qui est porté à une température d'au plus 220°C
(iii) qui est soumis à une pression comprise entre 10⁵ Pascal et 1,5 10² Pascal, au cours de la réaction
(iv) qui est soumis à une agitation mécanique tout au long de la réaction.

17. Procédé selon la revendication 16 **caractérisé en ce que** la quantité de composés d'acylation mise en oeuvre est comprise entre 0,4 et 6 fois la quantité stoéchiométrique pour une mole de composés polyhydroxylés.

18. Procédé selon l'une quelconque des revendications 16 et 17 **caractérisé en ce que** les composés polyhydroxylés en mélange à acyler au moins partiellement sont soumis à une acylation au moins partielle suivie de l'extraction d'au moins un composé polyhydroxylé au moins partiellement acylé.

19. Procédé selon l'une quelconque des revendications 16 à 18 **caractérisé en ce que** la réaction catalytique d'acylation, de l'un au moins des composés polyhydroxylés en mélange, est simple, partielle ou totale et s'effectue au moyen du composé d'acylation Y-R-CO-X choisis dans le groupe constitué par les monoacides carboxyliques R-COOH et/ou les chlorures d'acides carboxyliques R-Co-Cl, dans lesquels R est une chaîne hydrocarbonée en C₁ à C₄₃, saturées ou insaturées, éventuellement fonctionnalisées par des fonctions hydroxyles et/ou époxy.

20. Procédé selon l'une quelconque des revendications 16 à 18 **caractérisé en ce que** la réaction catalytique d'acylation de l'un au moins des composés polyhydroxylés, en mélange est mixte, partielle ou totale et s'effectue au moyen d'au moins deux composés d'acylation différents de formule Y-R-CO-X, choisis dans le groupe constitué par les monoacides carboxyliques R-COOH et/ou les chlorures d'acides carboxyliques dans lesquels R est une chaîne hydrocarbonée en C₁ à C₄₃, saturées ou insaturées, éventuellement fonctionnalisées par des fonctions hydroxyles et/ou époxy.

21. Procédé selon l'une quelconque des revendications 19 et 20 **caractérisé en ce que** les monoacides carboxyliques sont préférentiellement choisis dans le groupe constitué par les acides gras d'origine végétale ou animale avec une chaîne hydrocarbonée linéaire ou ramifiée en C₁ à C₄₃, saturée, en particulier les acides lauriques, palmitiques, stéariques, arachidiques ou monoinsaturée en particulier, les acides oléiques, éruciques, ou polyinsaturée en particulier l'acide linoléique.

22. Procédé selon l'une quelconque des revendications 19 et 20 **caractérisé en ce que** les chlorures d'acide carboxylique sont préférentiellement choisis dans le groupe constitué par les chlorures des acides gras d'origine végétale ou animale avec une chaîne hydrocarbonée linéaire ou ramifiée en C₁ à C₄₃, saturée, en particulier les acides lauriques, palmitiques, stéariques, arachidiques ou monoinsaturée en particulier, les acides oléiques, éruciques, ou polyinsaturée en particulier l'acide linoléique.

23. Procédé selon l'une quelconque des revendications 16 à 18 **caractérisé en ce que** la réaction catalytique d'acylation, de l'un au moins des composés polyhydroxylés en mélange, est complexe-simple, partielle ou totale et s'effectue au moyen d'un seul composé d' acylation choisi dans le groupe constitué par les diacides carboxyliques HO-CO-R-CO-OH aliphatiques ou aromatiques, les triacides carboxyliques aliphatiques ou aromatiques et/ou les anhydrides d'acides carboxyliques R-CO-O-CO-R' comportant des chaînes hydrocarbonées R et R' en C₁ à C₄₃, saturées ou insaturées, éventuellement fonctionnalisées par des fonctions hydroxyles et/ou époxy.

24. Procédé selon la revendication 23 **caractérisé en ce que** l'acylation catalytique est de type intermoléculaire par réaction entre chaque site acide du composé d'acylation avec un site hydroxyle sur deux chaînes distinctes l'une de l'autre de composés polyhydroxylés en créant un pontage intermoléculaire.

25. Procédé selon la revendication 23 **caractérisé en ce que** l'acylation catalytique est de type intramoléculaire par réaction entre chaque site acide du composé d'acylation avec deux sites hydroxyles d'une même chaîne de l'un au moins des composés polyhydroxylés en mélange.

26. Procédé selon l'une quelconque des revendications 23 à 25 **caractérisé en ce que** les acides dicarboxyliques sont préférentiellement choisis dans le groupe constitué par les acides glutariques, adipiques, pimériques, subériques, azélaïques, sébaciques, tridécanoiques.

27. Procédé selon l'une quelconque des revendications 16 à 18 **caractérisé en ce que** la réaction catalytique d'acylation, de l'un au moins des composés polyhydroxylés en mélange, est complexe-mixte, partielle ou totale et s'effectue au moyen d'au moins deux composés d'acylation choisis dans le groupe constitué par les diacides carboxyliques HO-CO-R-CO-OH aliphatiques ou aromatiques et/ou les anhydrides d'acides carboxyliques R-CO-O-CO-R' comportant des chaînes hydrocarbonées R et R' en C₁ à C₄₃, saturées ou insaturées, éventuellement fonctionnalisées par des fonctions hydroxyles et/ou époxy.

28. Procédé selon la revendication 27 **caractérisé en ce que** l'acylation catalytique est de type intermoléculaire par réaction de site à site, entre chaque site acide de chaque composé d'acylation dicarboxylique et un site hydroxylé appartenant à deux chaînes distinctes de polymères et/ou copolymères polyhydroxylés, en créant d'abord un pontage entre au moins deux molécules de polymères et/ou copolymères polyhydroxylés, avec chaque composé d'acylation dicarboxylique, puis de proche en proche, un réseau maillé par d'autres réactions intermoléculaires.

29. Procédé selon la revendication 27 **caractérisé en ce que** l'acylation catalytique est de type intramoléculaire par réaction de site à site, entre les deux sites acides de l'un des composés d'acylation dicarboxylique et deux sites hydroxylés d'une même chaîne de l'un au moins des polymères et/ou copolymères polyhydroxylés en mélange et entre les deux sites acides d'un autre des composés d'acylation dicarboxylique et deux sites hydroxylés de la même chaîne de l'un des polymères et/ou copolymères polyhydroxylés en mélange.

30. Procédé selon l'une quelconque des revendications 23 à 29 **caractérisé en ce que** les diacides carboxyliques sont préférentiellement choisis dans le groupe constitué par les acides gras dimères en C6 à C21.

31. Procédé selon l'une quelconque des revendications 23 à 29 **caractérisé en ce que** les anhydrides d'acides carboxyliques sont préférentiellement choisis issus du groupe des acides gras en C₁ à C₄₃ saturés ou insaturés, éventuellement fonctionnalisés par des fonctions hydroxyles et/ou époxy, et préférentiellement en C₂ à C₁₈.

32. Procédé selon l'une quelconque des revendications 16 à 18 **caractérisé en ce que** la réaction catalytique d'acylation, de l'un au moins des composés polyhydroxylés en mélange, est une transestérification simple, partielle ou totale, qui s'effectue au moyen d'un composé d'acylation choisi dans le groupe des monoesters R-CO-O-R' dans lesquels R et R' sont des chaînes hydrocarbonées en C₁ à C₄₃, saturées ou insaturées, éventuellement fonctionnalisées par des fonctions hydroxyles et/ou époxy.

33. Procédé selon l'une quelconque des revendications 16 à 18 **caractérisé en ce que** la réaction catalytique d'acylation, de l'un au moins des composés polyhydroxylés en mélange, est une transestérification simple-mixte, partielle ou totale, au moyen d'au moins deux composés d'acylation choisis dans le groupe des monoesters R-CO-OR' et R-CO-O-R" dans lesquels R, R' et R" sont des chaînes hydrocarbonées en C₁ à C₄₃, saturées ou insaturées, éventuellement fonctionnalisées par des fonctions hydroxyles et/ou époxy.

34. Procédé selon l'une quelconque des revendications 16 à 18 **caractérisé en ce que** la réaction catalytique d'acylation, de l'un au moins des composés polyhydroxylés en mélange, est une transestérification complexe-simple ou complexe-mixte, partielle ou totale, au moyen d'au moins un polyester d'acides au moins dicarboxyliques R'-O-CO-R-CO-O-R" ou d'au moins un ester-acide d'acides au moins dicarboxyliques R'-O- -CO- R-CO-OH, R, R' et R" étant des chaînes hydrocarbonées en C₁ à C₄₃, saturées ou insaturées, éventuellement fonctionnalisées par des fonctions hydroxyles et/ou époxy, R, R' et R" étant identiques ou différents.

35. Procédé selon la revendication 34 **caractérisé en ce que** les polyesters d'acide au moins dicarboxyliques et les esters-acides d'acides au moins dicarboxyliques sont choisis préférentiellement dans le groupe constitué par les acides gras dimères, diester d'acides gras dimères en C₆ à C₂₁.

36. Procédé selon l'une quelconque des revendications 16 à 35 **caractérisé en ce que** le catalyseur intervenant dans la réaction d'acylation est choisi dans le groupe des catalyseurs acides homogènes ou hétérogènes monofonctionnels ou bifonctionnels - inorganiques ou organiques pour activer l'acylation des composés polyhydroxylés en mélange par les chlorures d'acides anhydrides d'acides, acides gras monomères, acides gras dimères, acides gras trimères

37. Procédé selon la revendication 36 **caractérisé en ce que** le catalyseur acide est choisi dans le groupe constitué par les acides, en particulier l'acide sulfurique, l'acide phosphorique, l'acide paratoluène sulfonique, l'acide dodecyl sulfonique ou par les catalyseurs métalliques porteurs de sites acides de Lewis et de Bronsted en particulier, dans la famille des sulfates métalliques, en particulier le sulfate de zinc, le sulfate de magnésium, le sulfate de sodium ou par les résines échangeuses de cations aux sites acides forts sulfoniques, nafions ou sites acides faibles carboxyliques, phosphoniques ou encore par les zéolithes en particulier les tamis moléculaires, les pulgites, les argiles ou par les superacides en particulier, FSO₃H-SbF₅ ou par les polyacides.

38. Procédé selon l'une quelconque des revendications 16 à 35 **caractérisé en ce que** le catalyseur intervenant dans la réaction d'acylation est choisi dans le groupe des catalyseurs basiques homogènes ou hétérogènes monofonctionnels ou bifonctionnels inorganiques ou organiques pour activer l'acylation des composés polyhydroxylés par les monoesters d'alkyles d'acides gras, diesters d'alkyles d'acides gras, triesters d'alkyles et d'acides gras, triglycérides, diesters d'acides gras dimères, triesters d'acides gras trimères.

39. Procédé selon la revendication 38 **caractérisé en ce que** le catalyseur est choisi dans le groupe constitué par les catalyseurs basiques homogènes ou hétérogènes monofonctionnels ou bifonctionnels sélectionnés pour activer l'acylation des composés polyhydroxylés en mélange par les monoesters d'alkyles d'acides gras, diesters d'alkyles et d'acides gras, triesters d'alkyles et d'acides gras, triglycérides, diesters d'acides gras dimères, triesters d'acides gras, trimères, par les bases solides minérales en particulier les hydroxydes alcalins plus spécialement l'hydroxyde de sodium et l'hydroxyde de potassium, les hydroxydes alcalino-terreux en particulier ceux de calcium et de baryum, les carbonates alcalins en particulier le carbonate de sodium et le carbonate de potassium ou encore choisi parmi les bases solides organiques en particulier les alcoolates métalliques plus spécialement les méthylates de sodium ou de potassium, les éthylates de sodium ou de potassium , ou encore choisis dans le groupe des sels alcalins et métalliques, des acides carboxyliques organiques, dans le groupe des oxydes métalliques porteurs des sites basiques de Lewis en particulier TiO₂ MgO, ZnO, dans le groupe des résines échangeuses d'anions fonctionnalisées sous forme de chlorure, d'hydroxyde, de bicarbonate ou sous forme de base libre, et dans le groupe des bases organiques ou supportées acceptrices de liaisons hydrogène, amine libre en particulier la triéthylamine, la pyridine, la guanidine

40. Procédé selon l'une quelconque des revendications 16 à 39 **caractérisé en ce que** le catalyseur intervenant dans la réaction d'acylation est introduit dans le milieu réactionnel à raison de 0,01% en poids à 5% en poids par rapport aux composés polyhydroxylés en mélange à acyler.

41. Procédé selon l'une quelconque des revendications 16 à 40 **caractérisé en ce que** la pression appliquée au milieu réactionnel catalytique au cours de la réaction d'acylation est préférentiellement comprise entre 2,0.10² et 10⁵ Pascal.

42. Procédé selon l'une quelconque des revendications 16 à 41 **caractérisé en ce que** la température à laquelle est porté le milieu réactionnel au cours de la réaction d'acylation est préférentiellement choisie dans l'intervalle compris entre 50°C et 200°C.

43. Application des compositions de polyesters selon les revendications 1 à 15, éventuellement obtenues selon les revendications 16 à 42, aux lubrifiants automobiles et industriels, aux graisses lubrifiantes, aux lubrifiants destinés à la déformation des métaux et au travail des métaux, aux fluides hydrauliques plus particulièrement ceux résistants au feu, aux agents de démoulage et de poteyage, l'exploration pétrolière, les mines, les forages par tunnelier, les encres, les revêtements textiles et papiers, au domaine de l'alimentation, aux produits pour traitement du bois, aux additifs pour les boues de forage, de la détergence, des additifs épaississants, de la cosmétique, des intermédiaires de la synthèse chimique.

## Claims

1. At least partially acylated polyester compositions of polyhydroxylated compounds in a mixture consisting of glycerol polycarbonates, specific polyglycerols, [(α-hydroxymethyl) oxyethylene/(α-hydroxymethyl) ethylene carbonate] copolymers, [(α-hydroxyalkyl) oxyethylene/(a-hydroxyalkyl) ethylene carbonate] copolymers, [(α-alkyl) oxyethylene/(α-hydroxyalkyl) oxyethylene] copolymers, **characterised in that** said at least partially acylated polyesters of the polyhydroxylated compounds comply with the following general formulas wherein k is the acylation rate between 0.01 and 1 inclusive:
a) for the at least partially acylated polyesters of glycerol polycarbonates: 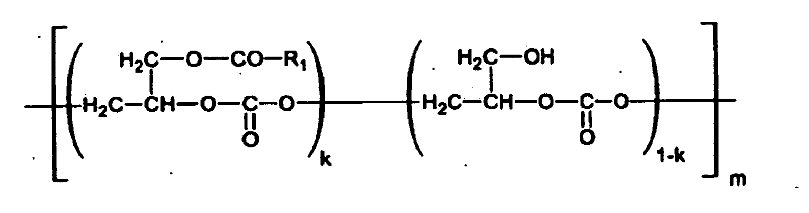 wherein "m" is at least equal to 2, which may take a value between 2 and 100 inclusive.
b) for the at least partially acylated polyesters of specific polyglycerols:
b1) 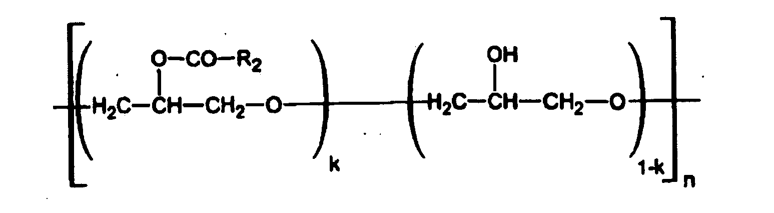 and/or b2) 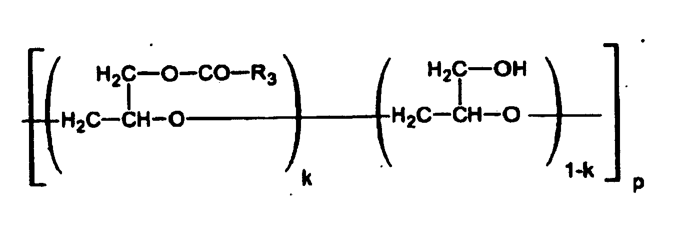 wherein "n" and "p" are each at least equal to 2 and take a value between 2 and 150 inclusive.
c) for the at least partially acylated polyesters of [(α-hydroxymethyl) oxyethylene/(α-hydroxymethyl) ethylene carbonate] copolymers:
c1) 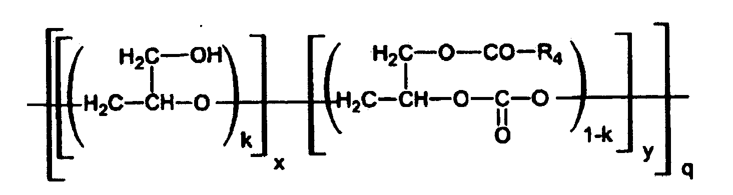 and/or c2) 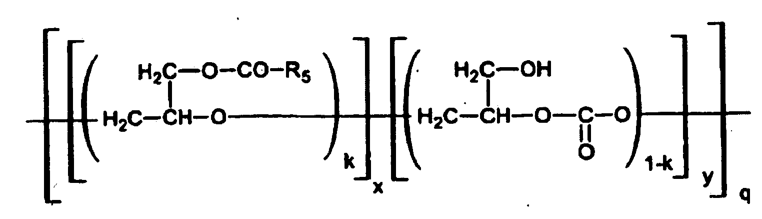 wherein "x" is at least equal to 2 and takes a value between 2 and 100 inclusive, "y" is at least equal to 2 and takes a value between 2 and 100 inclusive, and "q" is at least equal to 2 and takes a value between 2 and 100 inclusive.
d) for the at least partially acylated polyesters of [(α-hydroxyalkyl) oxyethylene/(α-hydroxyalkyl) ethylene carbonate] copolymers wherein at least one of α-alkyl 1 or α-alkyl 2 is a hydroxylated C₁ to C₄ hydrocarbon chain, whereas the other α-alkyl is H of a C₁ to C₄ hydrocarbon chain:
d1) 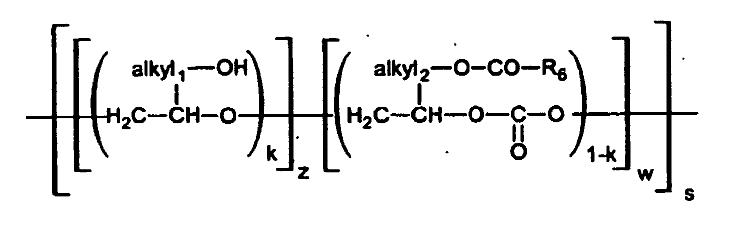 and/or d2) 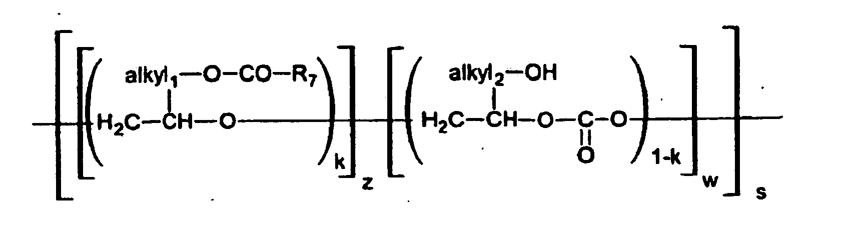 wherein "z" is at least equal to 2 and takes a value between 2 and 100, "w" is at least equal to 2 and takes a value between 2 and 100 and "s" is at least equal to 2 and takes a value between 2 and 100,
e) for the at least partially acylated polyesters of [(α-alkyl) oxyethylene/(α-hydroxyalkyl) oxyethylene] copolymers represented by the general formula:
e1) 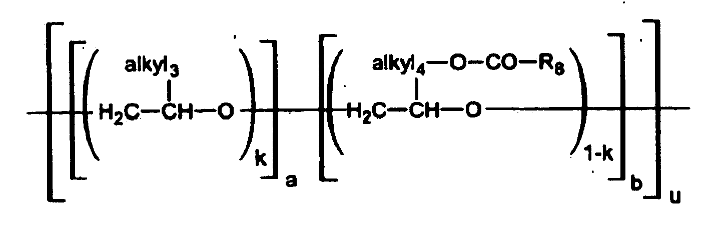 and
e2) 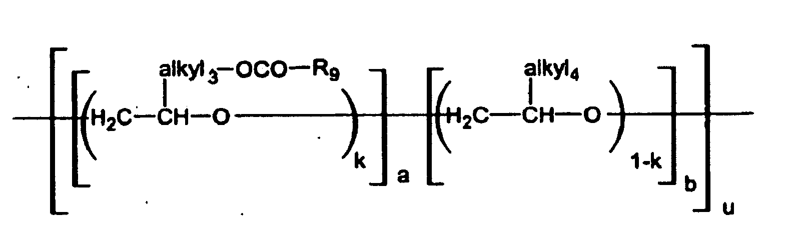
wherein "a" is at least equal to 2 and takes a value between 2 and 100, "b" is at least equal to 2 and takes a value between 2 and 100 and "u" is at least equal to 2 and takes a value between 2 and 100, whereas alkyl 3 and alkyl 4 are H or a C₁ to C₄ hydrocarbon chain,
R₁, R₂, R₃, R₄, R₅, R₆, R₇, R₈ and R₉ being saturated or unsaturated hydrocarbon chains, optionally functionalised with hydroxyl and/or epoxy functions and being identical or different.

2. Compositions according to claim 1 **characterised in that** the hydrocarbon chains R₁ to R₉ preferentially have a number of carbons between C₁ and C₄₃.

3. Compositions according to any of claims 1 and 2 **characterised in that** the polyesters originate from a simple, partial or total acylation reaction between at least one of the polyhydroxylated compounds of the mixture and an acylation compound selected in the group consisting of carboxylic monoacids R-COOH and carboxylic acid chlorides R-COCl, wherein R is a saturated or unsaturated C₁ to C₄₃ hydrocarbon chain, optionally functionalised by hydroxyl and/or epoxy functions.

4. Compositions according to claim 1 and 2 **characterised in that** the polyesters originate from a partial or total simple-composite acylation reaction between at least one the polyhydroxylated compounds of the mixture and at least two acylation compounds selected in the group consisting of monocarboxylic acids R-COOH different from each other and carboxylic acid chlorides R-COCl, wherein R is a saturated or unsaturated C₁ to C₄₃ hydrocarbon chain, optionally functionalised by hydroxyl and/or epoxy functions.

5. Compositions according to any of claims 1 and 2 **characterised in that** the polyesters originate from a complex-simple, partial or total acylation reaction between at least one of the polyhydroxylated compounds of the mixture, with a single acylation compounds selected in the group consisting of aliphatic or aromatic carboxylic diacids HO-CO-R-CO-OH and carboxylic acid anhydrides R-CO-O-CO-R' comprising saturated or unsaturated C₁ to C₄₃ hydrocarbon chains R and R', optionally functionalised by hydroxyl and/or epoxy functions.

6. Compositions according to claim 5 **characterised in that** the polyesters originate from a complex-simple, partial or total intermolecular acylation reaction, by means of coupling via acid functions and hydroxyl functions between at least two molecules of at least one of the polyhydroxylated compounds of the mixture and one molecule of at least one of the acylation compounds.

7. Compositions according to claim 5 **characterised in that** the polyesters originate from a complex-simple, partial or total intramolecular acylation reaction, by means of coupling between two hydroxylated sites of the same polyhydroxylated polymer and/or copolymer molecule of the mixture by means of two acid functions of the acylation compound.

8. Compositions according to any of claims 1 and 2 **characterised in that** the polyesters originate from a complex-composite, partial or total acylation reaction between at least one polyhydroxylated compound of the mixture and at least two different acylation compounds selected in the group consisting of different dicarboxylic acids HO-CO-R-COOH and different carboxylic acid anhydrides R-CO-O-CO-R' comprising saturated or unsaturated C₁ to C₄₃ hydrocarbon chains R and R', optionally functionalised by hydroxyl and/or epoxy functions.

9. Compositions according to claim 8 **characterised in that** the polyesters originate from a partial or total intermolecular complex-composite acylation reaction, by means of coupling via hydroxyl functions between at least two molecules of at least one of the polyhydroxylated polymers and/or copolymers of the mixture, and at least two different acylation compounds belonging to the group of different dicarboxylic acids and different carboxylic acid anhydrides via acid functions and hydroxyl functions.

10. Compositions according to claim 8 **characterised in that** the polymers originate from a complex-composite, partial or total intramolecular acylation reaction, by means of a site-to-site reaction between the two acid sites of one of the dicarboxylic acylation compounds and two hydroxylated sites of the same chain of one of the polyhydroxylated polymers and/or copolymers and between the two acid sites of another of the dicarboxylic acylation compounds and two hydroxylated sites of the same chain or another chain of one or more of the polyhydroxylated polymers and/or copolymers.

11. Compositions according to any of claims 1 and 2 **characterised in that** the polyesters originate from a simple acylation reaction by partial or total transesterification between at least one of the polyhydroxylated compounds of the mixture and one acylation compound selected in the group consisting of monoesters having the formula R-CO-O-R' wherein R and R' are saturated or unsaturated C₁ to C₄₃ hydrocarbon chains R and R', optionally functionalised by hydroxyl and/or epoxy functions.

12. Compositions according to claim 11 **characterised in that** the monoesters are preferentially selected in the group consisting of coconut, palm, rapeseed, sunflower and castor oil methyl esters.

13. Compositions according to any of claims 1 and 2 **characterised in that** the polyesters originate from a simple-composite, partial or total acylation reaction of transesterification type between at least one of the polyhydroxylated compounds of the mixture and at least two acylation compounds which are monoesters R-CO-O-R' and R"-CO-O-R"' wherein R, R', R" and R"' are saturated or unsaturated C₁ to C₄₃ hydrocarbon chains R and R', optionally functionalised by hydroxyl and/or epoxy functions, R, R' and R" and R"' possibly being identical provided that R or R' is different from R" and R"' or different.

14. Compositions according to any of claims 1 and 2 **characterised in that** the polyesters originate from a partial or total transesterification complex-composite reaction between at least one of the polyhydroxylated compounds of the mixture and at least one acylation compound which is at least one diester having the formula R'-CO-O-R-CO-O-R" or a monoester of a carboxylic acid having the formula R'-O-CO-R-CO-OH wherein R, R' and R" are saturated or unsaturated C₁ to C₄₃ hydrocarbon chains R and R', optionally functionalised by hydroxyl and/or epoxy functions, R, R' and R" possibly being identical or different, with at least one polyhydroxylated compound of the mixture.

15. Compositions according to any of claims 1 to 14 **characterised in that** the hydrocarbon chains R, R', R" and R"' are preferentially saturated or unsaturated C₁ to C₄₃ hydrocarbon chains R and R', optionally functionalised by hydroxyl and/or epoxy functions.

16. Method for the at least partial catalytic acylation of compositions comprising in a mixture of polyhydroxylated compounds consisting of glycerol polycarbonates, specific polyglycerols, [(α-hydroxymethyl) oxyethylene/(α-hydroxymethyl) ethylene carbonate] copolymers, [(α-hydroxyalkyl) oxyethylene/(α-hydroxyalkyl) ethylene carbonate] copolymers, [(α-alkyl) oxyethylene/(α-hydroxyalkyl) oxyethylene] copolymers, according to at least one of claims 1 to 15, **characterised in that** the at least partial catalytic acylation reaction is carried out in a biphasic heterogeneous liquid/liquid reaction medium formed from the polyhydroxylated compounds to be acylated and an acylation compound having the formula Y-R-CO-X, wherein X may be -OH (acid), Cl (chloride) or -O-R' (esters) and Y is H when the acylated compound is monofunctional and is -COOH(acid)-CO-O-R" (esters) when the acylated compound is at least bi-functional, said biphasic heterogeneous reaction medium:
(i) wherein the catalyst is dispersed when it is not formed "in situ" from the start of the acylation reaction
(ii) which is heated to a temperature of not more than 220°C
(iii) which is subjected to a pressure between 105 Pascal and 1.5 10² Pascal, during the reaction
(iv) which is subjected to mechanical stirring throughout the reaction.

17. Method according to claim 16 **characterised in that** the quantity of acylation compounds used is between 0.4 and 6 times the stoechiometric quantity for one mole of polyhydroxylated compounds.

18. Method according to any of claims 16 and 17
**characterised in that** the polyhydroxylated compounds in a mixture to be acylated at least partially are subjected to at least partial acylation followed by the extraction of at least one at least partially acylated polyhydroxylated compound.

19. Method according to any of claims 16 to 18
**characterised in that** the catalytic acylation reaction of at least one of the polyhydroxylated compounds in a mixture, is simple, partial or total and is performed by means of the acylation compound Y-R-CO-X selected in the group consisting of carboxylic monoacids R-COOH and/or carboxylic acid chlorides R-CO-Cl, wherein R is a
saturated or unsaturated C₁ to C₄₃ hydrocarbon chain, optionally functionalised by hydroxyl and/or epoxy functions.

20. Method according to any of claims 16 to 18,
**characterised in that** the catalytic acylation reaction of at least one of the polyhydroxylated compounds in a mixture is composite, partial or total and is performed by means of at least two different acylation compounds having the formula Y-R-CO-X, selected in the group consisting of carboxylic monoacids R-COOH and/or carboxylic acid chlorides wherein R is a saturated or unsaturated C₁ to C₄₃ hydrocarbon chain, optionally functionalised by hydroxyl and/or epoxy functions.

21. Method according to any of claims 19 and 20
**characterised in that** the carboxylic monoacids are preferentially selected from the group consisting of fatty acids of plant or animal origin with a linear or branched C₁ to C₄₃ hydrocarbon chain, which is saturated, particularly lauric, palmitic, stearic, arachidic acids, or monounsaturated, particularly oleic, erucic acids, or polyunsaturated, particularly linoleic acid.

22. Method according to any of claims 19 and 20
**characterised in that** the carboxylic acid chlorides are preferentially selected in the group consisting of chlorides of fatty acids of plant or animal origin with a linear or branched C₁ to C₄₃ hydrocarbon chain, which is saturated, particularly lauric, palmitic, stearic, arachidic acids, or monounsaturated, particularly oleic, erucic acids, or polyunsaturated, particularly linoleic acid.

23. Method according to any of claims 16 to 18
**characterised in that** the catalytic acylation reaction of at least one of the polyhydroxylated compounds in a mixture is complex-simple, partial or total and is performed by means of a single acylation compound selected in the group consisting of aliphatic or aromatic carboxylic diacids HO-CO-R-CO-OH, aliphatic or aromatic carboxylic triacids and/or carboxylic acid anhydrides R-CO-O-CO-R' comprising saturated or unsaturated C₁ to C₄₃ hydrocarbon chains R and R', optionally functionalised by hydroxyl and/or epoxy functions.

24. Method according to claim 23 **characterised in that** the catalytic acylation is intermolecular by means of a reaction between each acid site of the acylation compound with a hydroxyl site on two mutually separate chains of polyhydroxylated compounds by creating an intermolecular coupling.

25. Method according to claim 23 **characterised in that** the catalytic reaction is intramolecular by means of the reaction between each acid site of the acylation compound with two hydroxyl sites of the same chain of at least one of the polyhydroxylated compounds in a mixture.

26. Method according to any of claims 23 to 25
**characterised in that** the dicarboxylic acids are preferentially selected in the group consisting of glutaric, adipic, pimeric, suberic, azelaic, sebacic, tridecanoic acids.

27. Method according to any of claims 16 to 18
**characterised in that** the catalytic acylation reaction of at least one of the polyhydroxylated compounds in a mixture is complex-composite, partial or total and is performed by means of at least two acylation compounds selected in the group consisting of aliphatic or aromatic carboxylic diacids HO-CO-R-CO-OH and/or carboxylic acid anhydrides R-Co-O-CO-R' comprising saturated or unsaturated C₁ to C₄₃ hydrocarbon chains R and R', optionally functionalised by hydroxyl and/or epoxy functions.

28. Method according to claim 27 **characterised in that** the catalytic acylation is intermolecular by means of a site-to-site reaction between each acid site of each dicarboxylic acylation compound and a hydroxylated site belonging to two separate polyhydroxylated polymer and/or copolymer chains, by firstly creating a coupling between at least two polyhydroxylated polymer and/or copolymer molecules, with each dicarboxylic acylation compound, then by degrees, a meshed network by means of other intermolecular reactions.

29. Method according to claim 27 **characterised in that** the catalytic acylation is intramolecular by means of a site-to-site reaction, between the two acid sites of one of the dicarboxylic acylation compounds and two hydroxylated sites of the same chain of at least one of the polyhydroxylated polymers and/or copolymers in a mixture and between the two acid sites of another of the dicarboxylic acylation compounds and two hydroxylated sites of the same chain of one of the polyhydroxylated polymers and/or copolymers in a mixture.

30. Method according to any of claims 23 to 29
**characterised in that** the carboxylic diacids are preferentially selected in the group consisting of C6 to C21 dimeric fatty acids.

31. Method according to any of claims 23 to 29
**characterised in that** the carboxylic acid anhydrides are preferentially selected from the group of saturated or unsaturated C₁ to C₄₃ fatty acids, optionally functionalised by hydroxyl and/or epoxy functions, and preferentially C₂ to C₁₈.

32. Method according to any of claims 16 to 18
**characterised in that** the catalytic acylation reaction of at least one of the polyhydroxylated compounds in a mixture, is a simple, partial or total transesterification, which is performed by means of an acylation compound selected in the group of monoesters R-CO-O-R' wherein R and R' are saturated or unsaturated C₁ to C₄₃ hydrocarbon chains R and R', optionally functionalised by hydroxyl and/or epoxy functions.

33. Method according to any of claims 16 to 18
**characterised in that** the catalytic acylation reaction of at least one of the polyhydroxylated compounds in a mixture is a simple-composite, partial or total transesterification by means of at least two acylation compounds selected in the group of monoesters R-CO-O-R' and R-CO-O-R' wherein R, R' and R " are saturated or unsaturated C₁ to C₄₃ hydrocarbon chains, optionally functionalised by hydroxyl and/or epoxy functions.

34. Method according to any of claims 16 to 18
**characterised in that** the catalytic acylation reaction of at least one of the polyhydroxylated compounds in a mixture is complex-simple or complex-composite, partial or total transesterification, by means of at least one dicarboxylic acid polyester R'-O-CO-R-CO-O-R" or at least one dicarboxylic acid ester-acid R'-O--CO- R-CO-OH, wherein R, R' and R" are saturated or unsaturated C₁ to C₄₃ hydrocarbon chains, optionally functionalised by hydroxyl and/or epoxy functions, where R, R' and R" are identical or different.

35. Method according to claim 34 **characterised in that** the at least dicarboxylic acid polyesters and the at least dicarboxylic acid ester-acids are preferentially selected in the group consisting of C₆ to C₂₁ dimeric fatty acids, dimeric fatty acid diesters.

36. Method according to any of claims 16 to 35
**characterised in that** the catalyst involved in the acylation reaction is selected in the group of inorganic or organic, monofunctional or bifunctional homogeneous or heterogeneous acid catalysts to activate the acylation of the polyhydroxylated compounds in a mixture by the acid anhydride acid chlorides, monomeric fatty acids, dimeric fatty acids, trimeric fatty acids.

37. Method according to claim 36 **characterised in that** the acid catalyst is selected in the group consisting of acids, particularly sulphuric acid, phosphoric acid, paratoluene sulphonic acid, dodecyl sulphonic acid or by metal catalysts bearing Lewis and Bronsted acidic sites in particular, in the family of metal sulphates, particularly zinc sulphate, magnesium sulphate, sodium sulphate or by cation exchange resins at strong sulphonic acid, nafion sites or weak carboxylic, phosphonic acid sites or by zeolites particularly molecular sieves, pulgites, clays or by superacids in particular, FSO₃H-SbF₅ or by polyacids.

38. Method according to any of claims 16 to 35
**characterised in that** the catalyst involved in the acylation reaction is selected in the group of inorganic or organic, monofunctional or bifunctional homogeneous or heterogeneous basic catalysts to activate the acylation of polyhydroxylated compounds by fatty acid alkyl monoesters, fatty acid alkyl diesters, fatty acid and alkyl trimesters, triglycerides, dimeric fatty acid diesters, trimeric fatty acid triesters.

39. Methods according to claim 38 **characterised in that** the catalyst is selected in the group consisting of monofunctional or bifunctional homogeneous or heterogeneous basic catalysts to activate the acylation of the polyhydroxylated compounds in a mixture by fatty acid alkyl monoesters, fatty acid alkyl diesters, fatty acid and alkyl trimesters, triglycerides, dimeric fatty acid diesters, trimeric fatty acid triesters, by mineral solid bases particularly alkaline hydroxides, especially sodium hydroxide and potassium hydroxide, alkaline-earth hydroxides particularly those of calcium and barium, alkaline carbonates particularly sodium carbonate and potassium carbonate or selected from organic solid bases particularly metallic alcoholates, especially sodium or potassium methylates, sodium or potassium ethylates, or selected in the group of alkaline and metal salts, organic carboxylic acids, in the group of metal oxides bearing Lewis basic sites particularly TiO₂, MgO, ZnO, in the group of functionalised anion exchange resins for chloride, hydroxide, bicarbonate form or in free base form, and in the group of organic or supported bases accepting hydrogen bonds, free amine particularly triethylamine, pyridine, guanidine.

40. Method according to any of claims 16 to 39
**characterised in that** the catalyst involved in the acylation reaction is introduced into the reaction medium at a rate of 0.01% to 5% by weight with respect to the polyhydroxylated compounds in a mixture to be acylated.

41. Method according to any of claims 16 to 40
**characterised in that** the pressure applied to the catalytic reaction medium during the acylation reaction is preferentially between 2.0.10² and 10⁵ Pascal.

42. Method according to any of claims 16 to 41
**characterised in that** the temperature to which the reaction medium is heated during the acylation reaction is preferentially selected in the range between 50°C and 200°C.

43. Application of polyester compositions according to claims 1 to 15, optionally obtained according to claims 16 to 42, to motor vehicle and industrial lubricants, lubricant greases, lubricants for metal deformation and metalwork, hydraulic fluids more specifically those which are fireproof, lifting and die release agents, oil exploration, mining, tunnelling machine drilling, inks, textile and paper coatings, the field of food, wood treatment products, additives for drilling sludge, detergents, thickening additives, cosmetics, chemical synthesis intermediates.

## Patentansprüche

1. Zumindest teilweise acylierte Polyesterzusammensetzungen aus polyhydroxylierten Verbindungen in einem Gemisch bestehend aus Glycerolpolycarbonaten, spezifischen Polyglycerolen, [(α-hydroxymethyl)-oxyethylen/(α-hydroxymethyl)-ethylencarbonat-Copolymeren, [(α-hydroxyalkyl)-oxyethylen/(α-hydroxyalkyl)-ethylencarbonat-Copolymeren, [(α-alkyl)-oxyethylen/(α-hydroxyalkyl)-oxyethylen-Copolymeren, **dadurch gekennzeichnet, dass** die zumindest teilweise acylierten Polyester der polyhydroxylierten Verbindungen den folgenden allgemeinen Formeln entsprechen, worin k der Acylierungsgrad zwischen 0,01 und 1 ist, Grenzwerte inbegriffen:
a) für die zumindest teilweise acylierten Polyester der Glycerolpolycarbonate: 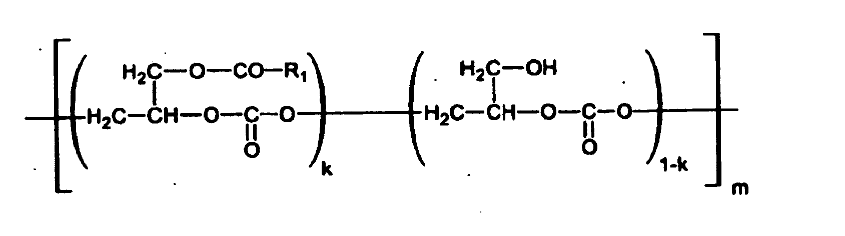 worin m mindestens gleich 2 ist und einen Wert zwischen 2 und 100 annehmen kann, Grenzwerte inbegriffen,
b) für die zumindest teilweise acylierten Polyester der spezifischen Polyglycerole:
b1) 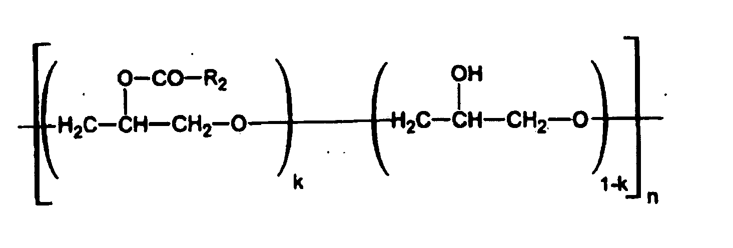 und/oder b2) 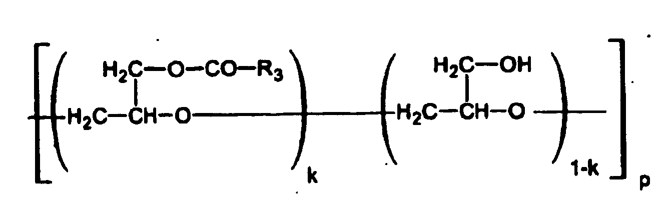 worin n und p jeweils mindestens gleich 2 sind und einen Wert zwischen 2 und 150 annehmen, Grenzwerte inbegriffen,
c) für die zumindest teilweise acylierten Polyester der [(α-hydroxymethyl)-oxyethylen/(α-hydroxymethyl)-ethylencarbonat-Copolymere:
c1) 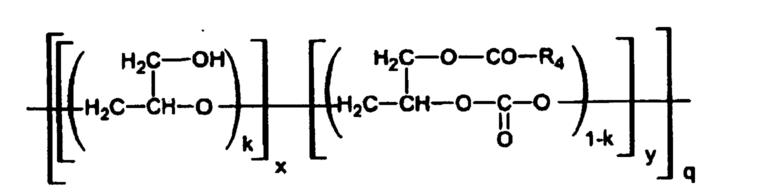 und/oder c2) 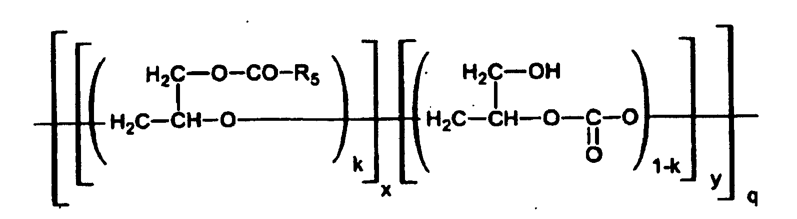 worin x mindestens gleich 2 ist und einen Wert zwischen 2 und 100 annimmt, Grenzwerte inbegriffen, y mindestens gleich 2 ist und einen Wert zwischen 2 und 100 annimmt, Grenzwerte inbegriffen, und q mindestens gleich 2 ist und einen Wert zwischen 2 und 100 annimmt, Grenzwerte inbegriffen,
d) für die Polyester der [(α-hydroxyalkyl)-oxyethylen/(α-hydroxyalkyl)-ethylencarbonat-Copolymere, bei denen mindestens eins der Alkyle α-Alkyl 1 oder α-Alkyl 2 eine hydroxylierte, zumindest teilweise acylierte C₁-C₄-Kohlenwasserstoffkette ist, während das andere α-Alkyl H oder eine C₁-C₄-Kohlenwasserstoffkette ist:
d1) 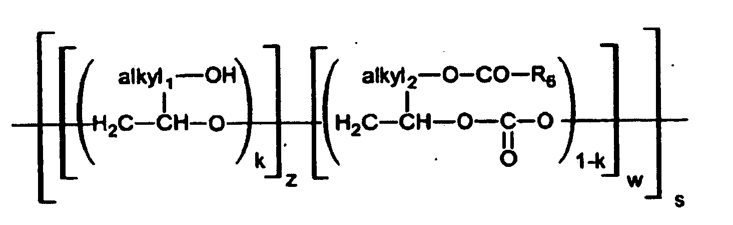 und/oder d2 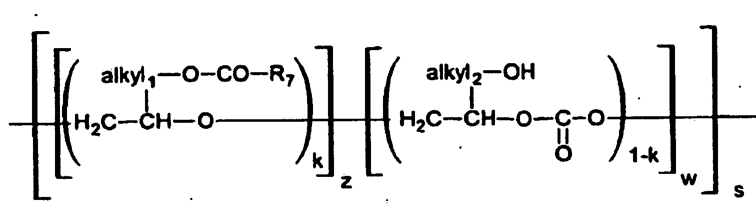 worin z mindestens gleich 2 ist und einen Wert zwischen 2 und 100 annimmt, w mindestens gleich 2 ist und einen Wert zwischen 2 und 100 annimmt, und s mindestens gleich 2 ist und einen Wert zwischen 2 und 100 annimmt,
e) für die für die zumindest teilweise acylierten Polyester der [(α-alkyl)-oxyethylen/(α-hydroxyalkyl)-oxyethylen-Copolymere, dargestellt durch die allgemeine Formel:
e1) 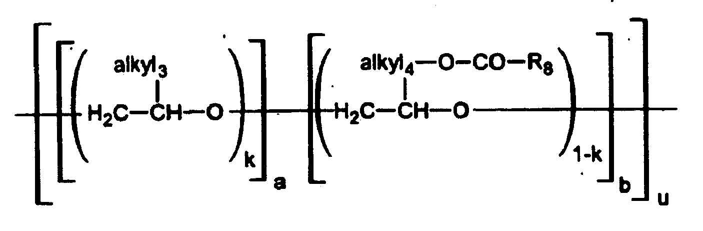 und
e2) 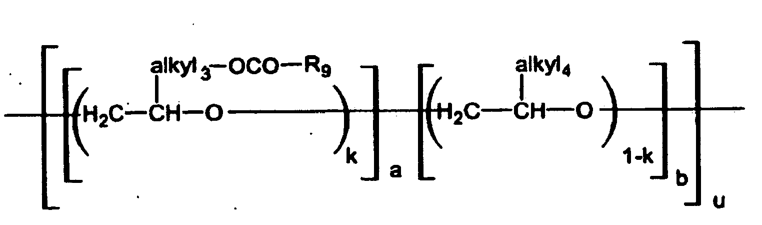
worin a mindestens gleich 2 ist und einen Wert zwischen 2 und 100 annimmt, b mindestens gleich 2 ist und einen Wert zwischen 2 und 100 annimmt, und u mindestens gleich 2 ist und einen Wert zwischen 2 und 100 annimmt, während das Alkyl 3 und Alkyl 4 H oder eine C₁-C₄ Kohlenwasserstoffkette sind,
wobei R₁, R₂, R₃, R₄, R₅, R₆, R₇, R₈ und R₉ gesättigte oder ungesättigte, eventuell durch Hydroxyl- und/oder Epoxyfunktionen funktionalisierte C₁-C₄₃ Kohlenwasserstoffketten sind, die identisch oder verschieden sein können.

2. Zusammensetzungen nach Anspruch 1, **dadurch gekennzeichnet, dass** die Kohlenwasserstoffketten R₁ bis R₉ vorzugsweise eine Kohlenstoffzahl zwischen C₁ und C₄₃ haben.

3. Zusammensetzungen nach irgendeinem der Ansprüche 1 und 2, **dadurch gekennzeichnet, dass** die Polyester aus der einfachen, teilweisen oder vollständigen Acylierungsreaktion zwischen mindestens einer der polyhydroxylierten Verbindungen des Gemischs und einer Acylierungsverbindung hervorgehen, die ausgewählt ist aus der Gruppe bestehend aus Monocarboxylsäuren R-COOH und Carboxylsäurechloriden R-COCl, worin R eine gesättigte oder ungesättigte, eventuell durch Hydroxyl- und/oder Epoxyfunktionen funktionalisierte C₁-C₄₃-Kohlenwasserstoffkette ist.

4. Zusammensetzungen nach irgendeinem der Ansprüche 1 und 2, **dadurch gekennzeichnet, dass** die Polyester aus der einfach-gemischten, teilweisen oder vollständigen Acylierungsreaktion zwischen mindestens einer der polyhydroxylierten Verbindungen des Gemischs und mindestens zwei Acylierungsverbindungen hervorgehen, die ausgewählt sind aus der Gruppe bestehend aus unterschiedlichen Monocarboxylsäuren R-COOH und Carboxylsäurechloriden R-COCl, worin R eine gesättigte oder ungesättigte, eventuell durch Hydroxyl- und/oder Epoxyfunktionen funktionalisierte C₁-C₄₃-Kohlenwasserstoffkette ist.

5. Zusammensetzungen nach irgendeinem der Ansprüche 1 und 2, **dadurch gekennzeichnet, dass** die Polyester aus der komplex-einfachen, teilweisen oder vollständigen Acylierungsreaktion zwischen mindestens einer der polyhydroxylierten Verbindungen des Gemischs und nur einer Acylierungsverbindung hervorgehen, die ausgewählt ist aus der Gruppe bestehend aus aliphatischen oder aromatischen Dicarboxylsäuren HO-CO-R-CO-OH und Carboxylsäureanhydriden R-CO-O-CO-R', die gesättigte oder ungesättigte, eventuell durch Hydroxyl- und/oder Epoxyfunktionen funktionalisierte C₁-C₄₃-Kohlenwasserstoffketten R und R' enthalten.

6. Zusammensetzungen nach Anspruch 5, **dadurch gekennzeichnet, dass** die Polyester aus der komplex-einfachen, teilweisen oder vollständigen Acylierungsreaktion intermolekularen Typs hervorgehen, durch Brückenbildung über die Säurefunktionen und Hydroxylfunktionen zwischen mindestens zwei Molekülen mindestens einer der polyhydroxylierten Verbindungen des Gemischs und einem Molekül mindestens einer der Acylierungsverbindungen.

7. Zusammensetzungen nach Anspruch 5, **dadurch gekennzeichnet, dass** die Polyester aus der komplex-einfachen, teilweisen oder vollständigen Acylierungsreaktion intramolekularen Typs hervorgehen, durch Brückenbildung zwischen mindestens zwei hydroxylierten Zentren des gleichen Moleküls polyhydroxylierter Polymere und/oder Copolymere des Gemischs über die zwei Säurefunktionen der Acylierungsverbindung.

8. Zusammensetzungen nach irgendeinem der Ansprüche 1 und 2, **dadurch gekennzeichnet, dass** die Polyester aus der komplex-gemischten, teilweisen oder vollständigen Acylierungsreaktion zwischen mindestens einer polyhydroxylierten Verbindung des Gemischs und mindestens zwei unterschiedlichen Acylierungsverbindungen hervorgehen, die ausgewählt sind aus der Gruppe bestehend aus unterschiedlichen Dicarboxylsäuren HO-CO-R-COOH und unterschiedlichen Carboxylsäureanhydriden R-CO-O-CO-R', die gesättigte oder ungesättigte, eventuell durch Hydroxyl- und/oder Epoxyfunktionen funktionalisierte C₁-C₄₃-Kohlenwasserstoffketten R und R' enthalten.

9. Zusammensetzungen nach Anspruch 8, **dadurch gekennzeichnet, dass** die Polyester aus der komplex-gemischten, teilweisen oder vollständigen Acylierungsreaktion intermolekularen Typs hervorgehen, durch Brückenbildung über Hydroxylfunktionen zwischen mindestens zwei Molekülen mindestens eines der polyhydroxylierten Polymere und/oder Copolymere des Gemischs und mindestens zwei unterschiedlichen, zur Gruppe der unterschiedlichen Dicarboxylsäuren und unterschiedlichen Carboxylsäureanhydride gehörenden Acylierungsverbindungen über die Säurefunktionen und Hydroxylfunktionen.

10. Zusammensetzungen nach Anspruch 8, **dadurch gekennzeichnet, dass** die Polyester aus der komplex-gemischten, teilweisen oder vollständigen Acylierungsreaktion intramolekularen Typs hervorgehen, durch eine Zentrum zu Zentrum-Reaktion zwischen den zwei Säurezentren einer der Dicarboxyl-Acylierungsverbindungen und zwei hydroxylierten Zentren der gleichen Kette eines der polyhydroxylierten Polymere und/oder Copolymere und zwischen den zwei Säurezentren einer anderen der Dicarboxyl-Acylierungsverbindungen und zwei hydroxylierten Zentren der gleichen Kette oder einer anderen Kette eines oder mehrerer der polyhydroxylierten Polymere und/oder Copolymere.

11. Zusammensetzungen nach irgendeinem der Ansprüche 1 und 2, **dadurch gekennzeichnet, dass** die Polyester aus der einfachen Acylierungsreaktion durch teilweise oder vollständige Umesterung zwischen mindestens einer der polyhydroxylierten Verbindungen des Gemischs und einer Acylierungsverbindung hervorgehen, die ausgewählt ist aus der Gruppe bestehend aus Monoestern der Formel R-CO-O-R', worin R und R' gesättigte oder ungesättigte, eventuell durch Hydroxyl- und/oder Epoxyfunktionen funktionalisierte C₁-C₄₃-Kohlenwasserstoffketten R und R' sind.

12. Zusammensetzungen nach Anspruch 11, **dadurch gekennzeichnet, dass** die Monoester bevorzugt ausgewählt sind aus der Gruppe bestehend aus Kokos-, Palm-, Colza-, Sonnenblumen- und Ricinusölmethylestern.

13. Zusammensetzungen nach irgendeinem der Ansprüche 1 und 2, **dadurch gekennzeichnet, dass** die Polyester aus der einfach-gemischten, teilweisen oder vollständigen Acylierungsreaktion durch Umesterung zwischen mindestens einer der polyhydroxylierten Verbindungen des Gemischs und mindestens zwei Acylierungsverbindungen hervorgehen, die Monoester R-CO-O-R' und R''-CO-O-R''' sind, worin R, R', R'' und R"' gesättigte oder ungesättigte, eventuell durch Hydroxyl- und/oder Epoxyfunktionen funktionalisierte C₁-C₄₃-Kohlenwasserstoffketten R und R' sind, wobei R, R', R'' und R"' identisch sein können unter dem Vorbehalt, dass R oder R' verschieden sind oder verschieden von R'' und R"' sind.

14. Zusammensetzungen nach irgendeinem der Ansprüche 1 und 2, **dadurch gekennzeichnet, dass** die Polyester aus der komplex-einfachen, teilweisen oder vollständigen Acylierungsreaktion durch Umesterung zwischen mindestens einer der polyhydroxylierten Verbindungen des Gemischs und nur einer Acylierungsverbindung hervorgehen, die mindestens ein Diester der Formel R'-CO-O-R-CO-O-R'' oder ein Monoester einer Dicarboxylsäure der Formel R'-O-CO-R-CO-OH ist, worin R, R' und R' ' gesättigte oder ungesättigte, eventuell durch Hydroxyl- und/oder Epoxyfunktionen funktionalisierte C₁-C₄₃-Kohlenwasserstoffketten R und R' sind, wobei R, R' und R'' identisch oder verschieden sein können, mit mindestens einer polyhydroxylierten Verbindung des Gemischs.

15. Zusammensetzungen nach irgendeinem der Ansprüche 1 bis 14, **dadurch gekennzeichnet, dass** die Kohlenwasserstoffketten R, R', R'' und R"' vorzugsweise gesättigte oder ungesättigte, eventuell durch Hydroxyl- und/oder Epoxyfunktionen funktionalisierte C₁-C₄₃-Kohlenwasserstoffketten sind.

16. Katalytisches Verfahren zur zumindest teilweisen Acylierung von Zusammensetzungen aus im Gemisch vorliegenden polyhydroxylierten Verbindungen, die Glycerolpolycarbonate, spezifische Polyglycerole, [(α-hydroxymethyl)-oxyethylen/(α-hydroxymethyl)-ethylencarbonat-Copolymere, (α-hydroxyalkyl)-oxyethylen/(α-hydroxyalkyl)-ethylencarbonat-Copolymere, [(α-alkyl)-oxyethylen/(α-hydroxyalkyl)-oxyethylen-Copolymere sind, nach mindestens einem der Ansprüche 1 bis 15, **dadurch gekennzeichnet, dass** die katalytische Reaktion zur zumindest teilweisen Acylierung in einem zweiphasigen, heterogenen flüssig/flüssig-Reaktionsmedium erfolgt, welches aus den zu acylierenden polyhydroxylierten Verbindungen und einer Acylierungsverbindung der Formel Y-R-CO-X besteht, worin X -OH (Säure), Cl (Chlorid) oder -O-R' (Ester) sein kann und Y H ist, wenn die acylierte Verbindung monofunktionell ist, und -COOH (Säure) -CO-O-R' (Ester) ist, wenn die acylierte Verbindung mindestens bifunktionell ist, zweiphasiges, heterogenes Reaktionsmedium,
(i) bei dem der Katalysator dispergiert wird, wenn er sich nicht "in situ" beim Start der Acylierungsreaktion bildet,
(ii) das auf eine Temperatur von höchstens 220°C erwärmt wird,
(iii) das im Verlauf der Reaktion mit einem Druck zwischen 10⁵ Pascal und 1,5 10² Pascal beaufschlagt wird,
(iv)das während der ganzen Reaktion mechanisch bewegt wird.

17. Verfahren nach Anspruch 16, **dadurch gekennzeichnet, dass** die benutzte Menge an Acylierungsverbindungen zwischen dem 0,4- bis 6-fachen der stöchiometrischen Menge für ein Mol polyhydroxylierter Verbindungen liegt.

18. Verfahren nach irgendeinem der Ansprüche 16 und 17, **dadurch gekennzeichnet, dass** die im Gemisch vorliegenden, zumindest teilweise zu acylierenden polyhydroxylierten Verbindungen einer zumindest teilweisen Acylierung ausgesetzt werden, gefolgt von der Extraktion mindestens einer, zumindest teilweise acylierten polyhydroxylierten Verbindung.

19. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen einfach, teilweise oder vollständig ist und mit der Acylierungsverbindung Y-R-CO-X erfolgt, die ausgewählt wird aus der Gruppe bestehend aus Monocarboxylsäuren R-COOH und/oder den Carboxylsäurechloriden R-CO-Cl, worin R eine gesättigte oder ungesättigte, eventuell durch Hydroxyl- und/oder Epoxyfunktionen funktionalisierte C₁-C₄₃-Kohlenwasserstoffkette ist.

20. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen gemischt, teilweise oder vollständig ist und mit mindestens zwei unterschiedlichen Acylierungsverbindungen der Formel Y-R-CO-X erfolgt, die ausgewählt werden aus der Gruppe bestehend aus Monocarboxylsäuren R-COOH und/oder Carboxylsäurechloriden, worin R eine gesättigte oder ungesättigte, eventuell durch Hydroxyl- und/oder Epoxyfunktionen funktionalisierte C₁-C₄₃-Kohlenwasserstoffkette ist.

21. Verfahren nach irgendeinem der Ansprüche 19 und 20, **dadurch gekennzeichnet, dass** die Monocarboxylsäuren bevorzugt ausgewählt werden aus der Gruppe bestehend aus Fettsäuren pflanzlicher oder tierischer Herkunft mit gesättigter, geradkettiger oder verzweigter C₁-C₄₃-Kohlenwasserstoffkette, insbesondere Laurin-, Palmitin-, Stearin-, Arachin- oder insbesondere monoungesättigten Säuren, Öl-, Eruca- oder polyungesättigten Säuren, insbesondere Linolsäure.

22. Verfahren nach irgendeinem der Ansprüche 19 und 20, **dadurch gekennzeichnet, dass** die Carboxylsäurechloride bevorzugt ausgewählt werden aus der Gruppe bestehend aus Fettsäurechloriden pflanzlicher oder tierischer Herkunft mit gesättigter, geradkettiger oder verzweigter C₁-C₄₃-Kohlenwasserstoffkette, insbesondere Laurin-, Palmitin-, Stearin-, Arachin- oder insbesondere monoungesättigten Säuren, Öl-, Eruca- oder polyungesättigten Säuren, insbesondere Linolsäure.

23. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen komplexeinfach, teilweise oder vollständig ist und mit nur einer Acylierungsverbindung erfolgt, die ausgewählt wird aus der Gruppe bestehend aus aliphatischen oder aromatischen Dicarboxylsäuren HO-CO-R-CO-OH, aliphatischen oder aromatischen Tricarboxylsäuren und/oder Carboxylsäureanhydren R-CO-O-CO-R', die gesättigte oder ungesättigte, eventuell durch Hydroxyl- und/oder Epoxyfunktionen funktionalisierte C₁-C₄₃-Kohlenwasserstoffketten R und R' enthalten.

24. Verfahren nach Anspruch 23, **dadurch gekennzeichnet, dass** die katalytische Acylierung intermolekularen Typs ist, durch Reaktion zwischen jedem Säurezentrum der Acylierungsverbindung und einem Hydroxylzentrum auf zwei voneinander verschiedenen Ketten polyhydroxylierter Verbindungen,
wobei eine intermolekulare Brücke gebildet wird.

25. Verfahren nach Anspruch 23, **dadurch gekennzeichnet, dass** die katalytische Acylierung intramolekularen Typs ist, durch Reaktion zwischen jedem Säurezentrum der Acylierungsverbindung und zwei Hydroxylzentren der gleichen Kette mindestens einer der im Gemisch vorliegenden polyhydroxylierten Verbindungen.

26. Verfahren nach irgendeinem der Ansprüche 23 bis 25, **dadurch gekennzeichnet, dass** die Dicarboxylsäuren bevorzugt ausgewählt werden aus der Gruppe bestehend aus Glutar-, Adipin-, Pimerin-, Suberin-, Azelain-, Sebacin-, Tridecanoinsäuren.

27. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen komplexgemischt, teilweise oder vollständig ist und mit mindestens zwei Acylierungsverbindungen erfolgt, die ausgewählt werden aus der Gruppe bestehend aus aliphatischen oder aromatischen Dicarboxylsäuren HO-CO-R-CO-OH und/oder Carboxylsäureanhydriden R-CO-O-CO-R', die gesättigte oder ungesättigte, eventuell durch Hydroxyl- und/oder Epoxyfunktionen funktionalisierte C₁-C₄₃-Kohlenwasserstoffketten R und R' enthalten.

28. Verfahren nach Anspruch 27, **dadurch gekennzeichnet, dass** die katalytische Acylierung intermolekularen Typs ist, durch Zentrum zu Zentrum-Reaktion zwischen jedem Säurezentrum jeder Dicarboxyl-Acylierungsverbindung und einem zu zwei unterschiedlichen Ketten polyhydroxylierter Polymere und/oder Copolymere gehörenden hydroxylierten Zentrum, wobei zunächst eine Brücke zwischen mindestens zwei Molekülen polyhydroxylierter Polymere und/oder Copolymere und danach schrittweise ein Gitternetz durch weitere Reaktionen gebildet wird.

29. Verfahren nach Anspruch 27, **dadurch gekennzeichnet, dass** die katalytische Acylierung intramolekularen Typs ist, durch Zentrum zu Zentrum-Reaktion zwischen den zwei Säurezentren einer der Dicarboxyl-Acylierungsverbindungen und zwei hydroxylierten Zentren der gleichen Kette mindestens eines der im Gemisch vorliegenden polyhydroxylierten Polymere und/oder Copolymere und zwischen den zwei Säurezentren einer anderen der Dicarboxyl-Acylierungsverbindungen und zwei hydroxylierten Zentren der gleichen Kette eines der im Gemisch vorliegenden polyhydroxylierten Polymere und/oder Copolymere.

30. Verfahren nach irgendeinem der Ansprüche 23 bis 29, **dadurch gekennzeichnet, dass** die Dicarboxylsäuren bevorzugt ausgewählt werden aus der Gruppe bestehend aus dimeren C₆-C₂₁-Fettsäuren.

31. Verfahren nach irgendeinem der Ansprüche 23 bis 29, **dadurch gekennzeichnet, dass** die Carboxylsäureanhydride bevorzugt ausgewählt werden aus der Gruppe bestehend aus gesättigten oder ungesättigten, eventuell durch Hydroxyl- und/oder Epoxyfunktionen funktionalisierten C₁-C₄₃- und bevorzugt C₂-C₁₈-Fettsäuren.

32. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen eine einfache, teilweise oder vollständige Umesterung ist, die mit einer Acylierungsverbindung erfolgt, die ausgewählt wird aus der Gruppe der Monoester R-CO-O-R', worin R und R' gesättigte oder ungesättigte, eventuell durch Hydroxyl- und/oder Epoxyfunktionen funktionalisierte C₁-C₄₃-Kohlenwasserstoffketten sind.

33. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen eine einfach-gemischte, teilweise oder vollständige Umesterung mit mindestens zwei Acylierungsverbindungen ist, die ausgewählt werden aus der Gruppe der Monoester R-CO-O-R' und R-CO-O-R'', worin R, R' und R'' gesättigte oder ungesättigte, eventuell durch Hydroxyl- und/oder Epoxyfunktionen funktionalisierte C₁-C₄₃-Kohlenwasserstoffketten sind.

34. Verfahren nach irgendeinem der Ansprüche 16 bis 18, **dadurch gekennzeichnet, dass** die katalytische Reaktion zur Acylierung mindestens einer der im Gemisch vorliegenden polyhydroxylierten Verbindungen eine komplex-einfache oder komplex-gemischte, teilweise oder vollständige Umesterung ist, die mit mindestens einem zumindest aus Dicarboxylsäuren aufgebauten Polyester R'-O-CO-R-CO-O-R' oder mindestens einem zumindest aus Dicarboxylsäuren aufgebauten Säureester R'-O--CO-R-CO-OH erfolgt, worin R und R'' gesättigte oder ungesättigte, eventuell durch Hydroxyl-und/oder Epoxyfunktionen funktionalisierte C₁-C₄₃-Kohlenwasserstoffketten sind, und worin R, R' und R" identisch oder verschieden sind.

35. Verfahren nach Anspruch 34, **dadurch gekennzeichnet, dass** die zumindest aus Dicarboxylsäuren aufgebauten Polyester und die zumindest aus Dicarboxylsäuren aufgebauten Säureester bevorzugt ausgewählt werden aus der Gruppe bestehend aus dimeren C₆-C₂₁-Fettsäuren, dimeren C₆-C₂₁-Fettsäurediestern.

36. Verfahren nach irgendeinem der Ansprüche 16 bis 35, **dadurch gekennzeichnet, dass** der bei der Acylierungsreaktion eingesetzte Katalysator aus der Gruppe der homogenen oder heterogenen, monofunktionellen oder bifunktionellen, anorganischen oder organischen Säure-Katalysatoren ausgewählt wird, um die Acylierung der im Gemisch vorliegenden polyhydroxylierten Verbindungen durch Säurechloride, Säureanhydride, monomere Fettsäuren, dimere Fettsäuren, trimere Fettsäuren zu aktivieren.

37. Verfahren nach Anspruch 36, **dadurch gekennzeichnet, dass** der Säurekatalysator ausgewählt wird aus der Gruppe bestehend aus Säuren, insbesondere Schwefelsäure, Phosphorsäure, Paratoluolsulfonsäure, Dodecylsulfosäure, oder aus Metallkatalysatoren mit Lewis- und insbesondere Bronsted-Säurezentren aus der Familie der Metallsulfate, insbesondere Zinksulfat, Magnesiumsulfat, Natriumsulfat, oder aus Kationenaustauschharzen an starken Sulfonsäurezentren, Nafionen oder schwachen Carboxyl- oder Phosphonsäurezentren, oder auch aus Zeolithen, insbesondere Molekularsiebe, Pulgite, Tone, oder aus Supersäuren, insbesondere FSO₃H SbF₅, oder Polysäuren.

38. Verfahren nach irgendeinem der Ansprüche 16 bis 35, **dadurch gekennzeichnet, dass** der bei der Acylierungsreaktion eingesetzte Katalysator ausgewählt wird aus der Gruppe der homogenen oder heterogenen, monofunktionellen oder bifunktionellen, anorganischen oder organischen Base-Katalysatoren, um die Acylierung der polyhydroxylierten Verbindungen durch Fettsäurealkylmonoester, Fettsäurealkyldiester, Fettsäurealkyltriester, Triglyceride, dimere Fettsäurediester, trimere Fettsäuretriester zu aktivieren.

39. Verfahren nach Anspruch 38, **dadurch gekennzeichnet, dass** der Katalysator ausgewählt wird aus der Gruppe bestehend aus homogenen oder heterogenen, monofunktionellen oder bifunktionellen, anorganischen oder organischen Base-Katalysatoren zur Aktivierung der Acylierung der im Gemisch vorliegenden polyhydroxylierten Verbindungen durch Fettsäurealkylmonoester, Fettsäurealkyldiester, Fettsäurealkyltriester, Triglyceride, dimere Fettsäurediester, trimere Fettsäuretriester, aus festen mineralischen Basen, insbesondere alkalischen Hydroxiden und dabei insbesondere Natriumhydroxid und Kaliumhydroxid, erdalkalischen Hydroxiden, insbesondere Calcium- und Bariumhydroxid, alkalischen Carbonaten, insbesondere Natriumcarbonat und Kaliumcarbonat, oder auch ausgewählt wird unter festen organischen Basen, insbesondere Metallalkoholaten und dabei insbesondere Natrium- oder Kaliummethylaten, Natrium- oder Kaliumethylaten, oder aus der Gruppe der alkalischen und metallischen Salze, der organischen Carboxylsäuren, aus der Gruppe der Metalloxide mit Lewis-Basezentren, insbesondere TiO₂, MgO, ZnO, aus der Gruppe der Anionenaustauschharze, funktionalisiert als Chlorid, Hydroxid, Bicarbonat oder als freie Base, und aus der Gruppe der organischen oder Trägerbasen, die Wasserstoffbindungen, freies Amin aufnehmen, insbesondere Triethylamin, Pyridin, Guanidin.

40. Verfahren nach irgendeinem der Ansprüche 16 bis 39, **dadurch gekennzeichnet, dass** der bei der Acylierungsreaktion eingesetzte Katalysator in einer Menge von 0,01 Gew.-% bis 5 Gew.-% bezogen auf die zu acylierenden, als Mischung vorliegenden polyhydroxylierten Verbindungen in das Reaktionsmedium eingebracht wird.

41. Verfahren nach irgendeinem der Ansprüche 16 bis 40, **dadurch gekennzeichnet, dass** der Druck, mit dem das Reaktionsmedium während der Acylierungsreaktion beaufschlagt wird, im Bereich zwischen 2,0.10² und 10⁵ Pascal liegt.

42. Verfahren nach irgendeinem der Ansprüche 16 bis 41, **dadurch gekennzeichnet, dass** die Temperatur, auf die das Reaktionsmedium während der Acylierungsreaktion erwärmt wird, vorzugsweise im Bereich zwischen 50°C und 200°C gewählt wird.

43. Anwendung der Polyesterzusammensetzungen nach den Ansprüchen 1 bis 15, die eventuell gemäß den Ansprüchen 16 bis 42 erhalten werden, bei Auto- und Industrieschmierstoffen, Schmierfetten, Schmierstoffen für Metallumformung und Metallbearbeitung, Hydraulikflüssigkeiten, insbesondere feuerfesten Hydraulikflüssigkeiten, Formtrenn- und schlichtemitteln, in der Erdölförderung, im Bergbau, bei Tunnelbohrmaschinen, Farben, Textil- und Papierauskleidungen, im Ernährungsbereich, bei Holzbehandlungsprodukten, Bohrschlamm-, Wasch- und Reinigungsmitteladditiven, bei Verdickern, bei Kosmetikadditiven, bei Additiven für Zwischenstufen der chemischen Synthese.
